# EUROPÄISCHE PATENTSCHRIFT

(11) **EP 4 015 200 B1**
(45) Veröffentlichungstag und Bekanntmachung des Hinweises auf die Patenterteilung: **31.07.2024**
(21) Anmeldenummer: 20216121.2
(22) Anmeldetag: 21.12.2020
(51) Int. Cl.: B29D 29/08, B29C 65/10

(54) **ZAHNRIEMEN-PROFILELEMENT-VERBINDUNGSVORRICHTUNG UND HERSTELLUNGSVERFAHREN**
GEAR BELT PROFILE ELEMENT CONNECTING DEVICE AND PRODUCTION METHOD
DISPOSITIF DE LIAISON D'ÉLÉMENT DE PROFIL ET DE COURROIE DENTÉE ET PROCÉDÉ DE PRODUCTION

(43) Veröffentlichungstag der Anmeldung: 22.06.2022
(73) Patentinhaber: BRECO Antriebstechnik Breher GmbH & Co. KG, 32457 Porta Westfalica (DE)
(72) Erfinder: STEINERT, Thomas, 32545 Bad Oeynhausen (DE)
(74) Vertreter: Zenz Patentanwälte Partnerschaft mbB

(56) Entgegenhaltungen:
- EP-A1- 2 053 268
- EP-A1- 3 453 522
- WO-A1-2008/125966
- DE-A1- 102009 042 467
- DE-A1- 3 442 187
- DE-U1- 202019 103 732
- JP-A- 2003 106 377
- JP-A- H11 333 936
- US-A1- 2016 016 620

## Beschreibung

Die Erfindung betrifft eine Zahnriemen-Profilelement-Verbindungsvorrichtung zur stoffschlüssigen Anbringung eines Profilelements auf einem Zahnriemen. Ebenso betrifft die Erfindung ein System zur stoffschlüssigen Anbringung eines Profilelements auf einem Zahnriemen, wobei das System die Zahnriemen-Profilelement-Verbindungsvorrichtung aufweist. Schließlich betrifft die vorliegende Erfindung ein Herstellungsverfahren zur stoffschlüssigen Anbringung eines Profilelements auf einem Zahnriemen.

Aus der JP 2003 106377 A ist ein Riemen mit einem Rückstrahleffekt und ein Herstellungsverfahren für einen solchen Riemen bekannt. Dieser Riemen soll für eine bessere Erkennbarkeit bei Dunkelheit sorgen und weist daher auf seinem Rücken eine Schicht mit reflektierenden Eigenschaften auf. Diese Schicht wird bei dem thermoplastischen Riemen mittels Erwärmung des Riemens aufgeklebt. Ferner ist aus der WO 2008/125966 A1 eine Vorrichtung zur Aufbringung eines mit Zähnen versehenen Riemens auf einen Basis-Riemen dient. Der mit Zähnen versehene Riemen und der Basis-Riemen werden synchron zueinander bewegt, wobei Heißluft in einen Bereich ausströmt, an welchem der Riemen und der Basis-Riemen gegenseitigen Kontakt erfahren. Dabei drückt eine Riemenscheibe mit Zähnen versehenen Riemen auf den Basis-Riemen auf. Das Dokument US 9878749 B2 offenbart ein Verfahren zum Verbinden eines Profilelements mit einer Gummiraupe, wobei die Fügung der beiden Komponenten durch ein Werkzeug erfolgt, in dem beide Komponenten zusammen vulkanisiert werden. Das Dokument EP 2053268 A1 offenbart ein ähnliches Verfahren zur Anbringung eines Profilelements auf ein Transport- oder Prozessband.

Ein Zahnriemen wird heutzutage oftmals als hochpräzise positionierbares Förderband in einer Produktionslinie genutzt, um Werkstücke in automatisierten Fertigungsprozessen von einer Bearbeitungsstation zu einer anderen Bearbeitungsstation zu transportieren und/oder zu positionieren. Dabei weist ein solcher Zahnriemen eine Zahnseite mit einer Bezahnung und einen rückseitig der Zahnseite befindlichen Zahnriemenrücken auf. Für ein wie vorstehend beschriebenes Transportieren und hochpräzises Positionieren sind auf dem Zahnriemenrücken oftmals Profilelemente befestigt, welche die Werkstücke halten und/oder separieren.

Bei bekannten Ansätzen zur Herstellung von Zahnriemen mit Profilelementen werden der Zahnriemen und die Profilelemente zunächst in separaten Fertigungsprozessen vorgefertigt. Erst dann werden in einem manuell durchgeführten Arbeitsschritt die zuvor hergestellten Profilelemente mit einem ebenfalls zuvor hergestellten Zahnriemen gefügt. Das Fügen der einzelnen Profilelemente kann formschlüssig durch Montieren (zum Beispiel Aufschrauben) oder stoffschlüssig durch Aufschweißen erfolgen. Ein Beispiel für einen Zahnriemen mit formschlüssig angebrachten Profilelementen ist in der EP 1 092 657 beschrieben, wobei Halteelemente mit einem flügelförmigen Kopf in eine Ausnehmung eines Zahns der Bezahnung eingesetzt sind und mit dem Profilelement verschraubt werden, was manuell durch einen Monteur erfolgt und entsprechend zeitaufwendig ist. Nicht weniger aufwendig gestaltet sich das stoffschlüssige Fügen, welches ebenfalls manuell mit einem sogenannten Schweißspiegel ausgeführt wird, wobei es sich bei dem Schweißspiegel vereinfacht gesprochen um einen Lötkolben handelt, an dessen Ende ein zumeist prismatisches Werkzeug befestigt ist, dessen Breite auf den Fuß des Profilelements abgestimmt ist. Der Schweißspiegel wird an die zu verbindenden Positionen von Zahnriemenrücken und Profilelement gehalten und erwärmt dort das Material in einen schmelzflüssigen Zustand, wonach anschließend das Profilelement und der Zahnriemenrücken gegeneinandergedrückt und so miteinander verbunden werden. Dabei kommt der Schweißspiegel mit beiden Schweißpartnern (Zahnriemen und Profilelement) in Berührung, was in nachteiliger Weise mit einer Verschmutzung des heißen und als Schweißwerkzeugs dienenden Schweißspiegels mit schmelzflüssigem, teilweise verbranntem Material verbunden ist. Das auf diese Weise durchgeführte stoffschlüssige Fügen stellt somit einen manuell durchzuführenden Arbeitsschritt dar, wobei in einem weiteren Arbeitsschritt der beim Aufschweißen austretende Schweißgrat entfernt werden muss. Da die einzelnen Profilelemente bei diesen bekannten Ansätzen zum formschlüssigen und stoffschlüssigen Fügen manuell mit dem Zahnriemen gefügt werden müssen, ist das Herstellungsverfahren zeit- und kostenaufwendig, da insbesondere manuelle Nacharbeiten an den einzelnen Profilelementen erforderlich werden können, wie zum Beispiel das Entgraten bei aufgeschweißten Profilelementen. Die Verschmutzung des Schweißwerkzeugs bei dem stoffschlüssigen Fügen steht ferner einer Automatisierung des Fügeprozesses entgegen, da nach jedem Fügevorgang der mit dem aufzubringenden Profilelement und dem Zahnriemenrücken in Kontakt tretende Schweißspiegel manuell gereinigt werden muss.

Der Erfindung liegt die Aufgabe zugrunde, eine Lösung zu schaffen, durch die eine Automatisierung eines stoffschlüssigen Fügeprozesses möglich ist und welche ein kostengünstiges und effektives Herstellungsverfahren zur stoffschlüssigen Anbringung eines Profilelements auf einem Zahnriemen bereitstellt.

Diese Aufgabe wird erfindungsgemäß gelöst durch eine Zahnriemen-Profilelement-Verbindungsvorrichtung mit den Merkmalen gemäß dem Patentanspruch 1 und durch ein Herstellungsverfahren mit den Merkmalen gemäß dem Patentanspruch 17. Ebenso wird die Aufgabe von einem System zur stoffschlüssigen Anbringung eines Profilelements auf einem Zahnriemen mit den Merkmalen gemäß Patentanspruch 16 gelöst.

Die erfindungsgemäße Zahnriemen-Profilelement-Verbindungsvorrichtung weist wenigstens eine zur Erzeugung von einer Wärmeluftströmung ausgebildete Wärmeluftströmungs-Gebläse-Vorrichtung und wenigstens eine mit der Wärmeluftströmungs-Gebläse-Vorrichtung strömungsverbundene Wärmeluftströmungs-Verteiler-Vorrichtung, wobei die wenigstens eine Wärmeluftströmungs-Verteiler-Vorrichtung einen sich in eine Längsrichtung erstreckenden Verteiler-Körper aufweist, der innen hohl mit einer Verteiler-Kammer ausgebildet ist, auf. Der Verteiler-Körper umfasst dabei eine erste Luftauslassgeometrie, welche in die Längsrichtung ausgerichtet ausgebildet ist und welche mit der Verteiler-Kammer strömungsverbunden ist. Die die wenigstens eine Wärmeluftströmungs-Verteiler-Vorrichtung oder eine weitere Wärmeluftströmungs-Verteiler-Vorrichtung, welche mit der Wärmeluftströmungs-Gebläse-Vorrichtung oder mit einer weiteren Wärmeluftströmungs-Gebläse-Vorrichtung strömungsverbunden ist und welche einen weiteren sich in die Längsrichtung erstreckenden und innen hohl mit einer weiteren Verteiler-Kammer ausgebildeten Verteiler-Körper aufweist, weist eine zweite Luftauslassgeometrie auf, welche in die Längsrichtung ausgerichtet ausgebildet ist und welche mit der Verteiler-Kammer oder mit der weiteren Verteiler-Kammer strömungsverbunden ist, wobei die erste Luftauslassgeometrie und die zweite Luftauslassgeometrie sich gegenüberliegend angeordnet sind. Die durch die Verteiler-Kammer strömende Wärmeluftströmung tritt dabei über die erste Luftauslassgeometrie und die zweite Luftauslassgeometrie aus dem Verteiler-Körper aus.

Das erfindungsgemäße System zur stoffschlüssigen Anbringung eines Profilelements auf einem Zahnriemen weist wenigstens eine Zahnriemen-Profilelement-Verbindungsvorrichtung nach einem der Ansprüche 1 bis 15 und eine zum Anordnen eines anzubringenden Profilelements ausgebildete Robotervorrichtung mit wenigstens einem beweglich ausgebildeten Robotergreifarm auf.

Bei dem erfindungsgemäßen Herstellungsverfahren zur stoffschlüssigen Anbringung eines Profilelements auf einem Zahnriemen, welcher eine Zahnseite mit einer Bezahnung und einen rückseitig der Zahnseite befindlichen Zahnriemenrücken aufweist, wird das anzubringende Profilelement in einem vorgegebenen Abstand zu dem Zahnriemenrücken des Zahnriemens angeordnet, wobei nach dem Anordnen ein für das anzubringende Profilelement vorgesehener Anbringungsabschnitt auf dem Zahnriemenrücken und ein auf dem Anbringungsabschnitt anzubringender Profilelementabschnitt des anzubringenden Profilelements mittels Wärmeluftströmung auf eine vorgegebene Schmelztemperatur für eine vorgegebene Zeitdauer erwärmt werden. Bei dem erfindungsgemäßen Herstellungsverfahren wird nach dem Erwärmen auf die vorgegebene Schmelztemperatur für die vorgegebene Zeitdauer der Profilelementabschnitt auf den Anbringungsabschnitt aufgesetzt.

Vorteilhafte und zweckmäßige Ausgestaltungen und Weiterbildungen der Erfindung ergeben sich aus den Unteransprüchen.

Durch die Erfindung werden eine Zahnriemen-Profilelement-Verbindungsvorrichtung, ein System mit einer solchen Zahnriemen-Profilelement-Verbindungsvorrichtung und ein Herstellungsverfahren zur Verfügung gestellt, mit welchen eine stoffschlüssige Anbringung eines Profilelements auf einem Zahnriemen im Rahmen eines vollautomatisierten Prozesses möglich ist. Die Erfindung nutzt dabei das Prinzip der Wärmeluftströmung bzw. Konvektion, bei welcher die stoffschlüssig zu verbindenden Flächen mit einer gleichmäßigen Temperaturverteilung sowie einer gleichmäßigen Luftmenge erwärmt werden, ohne dass die Zahnriemen-Profilelement-Verbindungsvorrichtung in Kontakt mit den zu verbindenden Flächen kommt. Der Erwärmungsprozess erfolgt erfindungsgemäß reproduzierbar und berührungslos mittels Wärmeluftströmung, welche die zu verbindenden Flächen des Zahnriemenrückens und des Profilelements auf die erforderliche Temperatur erwärmt. Erfindungsgemäß sind bei dem vollautomatisierten Prozess die Arbeitsschritte eines aufwändigen manuellen Nacharbeitens an den einzelnen Profilelementen, wie zum Beispiel des Entgratens, und des Säuberns eines Schweißspiegels nicht mehr erforderlich, so dass mit Hilfe der Erfindung Herstellzeit und Produktionskosten gesenkt werden können.

In Ausgestaltung der Zahnriemen-Profilelement-Verbindungsvorrichtung sieht die Erfindung vor, dass der Verteiler-Körper in einen Luft-Zuführungsabschnitt mit einem Durchströmungsquerschnitt und einen Luft-Ausbringungsabschnitt mit einem Strömungsquerschnitt unterteilt ist, wobei die erste Luftauslassgeometrie und die zweite Luftauslassgeometrie in dem Luft-Ausbringungsabschnitt ausgebildet und angeordnet sind und der Luft-Zuführungsabschnitt mit der Wärmeluftströmungs-Gebläse-Vorrichtung strömungsverbunden ist. Durch die Unterteilung des Verteiler-Körpers in einen Luft-Zuführungsabschnitt und einen Luft-Ausbringungsabschnitt können die beiden Abschnitte mit unterschiedlichen Querschnitten ausgebildet sein, um die Strömungsgeschwindigkeit und/oder den Grad der Turbulenz der von der Wärmeluftströmungs-Gebläse-Vorrichtung kommenden und der Wärmeluftströmungs-Verteiler-Vorrichtung zugeführten Wärmeluftströmung innerhalb der Wärmeluftströmungs-Verteiler-Vorrichtung auf ein gewünschtes Maß einzustellen.

Dementsprechend hat es sich in Ausgestaltung der Zahnriemen-Profilelement-Verbindungsvorrichtung als vorteilhaft erwiesen, wenn der Durchströmungsquerschnitt größer ausgebildet ist als der Strömungsquerschnitt.

Dabei kann gemäß einer weiteren Ausgestaltung der Zahnriemen-Profilelement- Verbindungsvorrichtung ein Übergang von dem Strömungsquerschnitt zu dem Durchströmungsquerschnitt als eine Stufe ausgebildet sein.

Im Hinblick auf eine gleichmäßige Temperaturverteilung für die zu erwärmenden und zu verbindenden Stellen von Zahnriemenrücken und Profilelement besteht eine Möglichkeit in Ausgestaltung der Zahnriemen-Profilelement-Verbindungsvorrichtung darin, dass die erste Luftauslassgeometrie als ein Durchströmungsschlitz mit einer Schlitzbreite ausgebildet ist, wobei sich der Durchströmungsschlitz in die Längsrichtung erstreckt.

Eine Vergleichmäßigung des Strömungsprofils der Wärmeluftströmung aus dem Durchströmungsschlitz besteht in weiterer Ausgestaltung der Zahnriemen-Profilelement-Verbindungsvorrichtung darin, dass die Schlitzbreite des Durchströmungsschlitzes konstant ausgebildet ist und mindestens 3% und höchstens 10% des Strömungsquerschnitts des Luft-Ausbringungsabschnitts entspricht.

Alternativ kann für ein gleichmäßiges Strömungsprofil der Wärmeluftströmung aus dem Durchströmungsschlitz in Ausgestaltung der Zahnriemen-Profilelement-Verbindungsvorrichtung die Schlitzbreite des Durchströmungsschlitzes in eine von dem Luft-Zuführungsabschnitt wegweisende Richtung abnehmend ausgebildet sein, wobei die Schlitzbreite von höchstens 35% des Strömungsquerschnitts des Luft-Ausbringungsabschnitts bis hin zu wenigstens 5% und höchstens 10% des Strömungsquerschnitts des Luft-Ausbringungsabschnitts abnehmend ausgebildet ist.

Als Alternative zu einer schlitzförmigen Ausbildung ist es für ein gleichmäßiges Strömungsprofil der Wärmeluftströmung in anderer Ausgestaltung der Zahnriemen-Profilelement-Verbindungsvorrichtung von Vorteil, wenn die erste Luftauslassgeometrie mehrere Durchströmungsbohrungen aufweist, welche beabstandet zueinander und in Längsrichtung hintereinanderliegend angeordnet sind.

In Ausgestaltung der Durchströmungsbohrungen für die Zahnriemen-Profilelement-Verbindungsvorrichtung ist ferner vorgesehen, dass die Durchströmungsbohrungen mit einem gleichen Durchmesser ausgebildet sind, welcher höchstens 35% des Strömungsquerschnitts des Luft-Ausbringungsabschnitts beträgt.

Zusätzlich ist es bei der Ausgestaltung der Durchströmungsbohrungen bei der Zahnriemen-Profilelement-Verbindungsvorrichtung von Vorteil, wenn die Durchströmungsbohrungen einen konstanten Zwischenraum zwischen sich aufweisen, welcher mindestens 40% und höchstens 50% des Strömungsquerschnitts des Luft-Ausbringungsabschnitts beträgt.

Alternativ zu Durchströmungsbohrungen mit einem gleichen Durchmesser kann es für ein gleichmäßiges Strömungsprofil der Wärmeluftströmung auch vorteilhaft sein, wenn die Durchströmungsbohrungen mit in eine von dem Luft-Zuführungsabschnitt wegweisende Richtung abnehmend ausgebildeten Durchmessern ausgebildet sind, welche wenigstens 15% und höchstens 45% des Strömungsquerschnitts des Luft-Ausbringungsabschnitts betragen.

Als Alternative zu einer schlitzförmigen Ausbildung oder zu Durchströmungsbohrungen sieht die Erfindung in weiterer Ausgestaltung der Zahnriemen-Profilelement-Verbindungsvorrichtung vor, dass die erste Luftauslassgeometrie mehrere Querschlitze aufweist, wobei sich ein jeweiliger Querschlitz mit einer Quererstreckung quer zur Längsrichtung erstreckt, und wobei die Querschlitze in Längsrichtung hintereinanderliegend und beabstandet zueinander angeordnet ausgebildet sind.

In anderer Ausgestaltung der Zahnriemen-Profilelement-Verbindungsvorrichtung ist es auch denkbar und vorteilhaft, wenn die erste Luftauslassgeometrie zusätzlich zu dem Durchströmungsschlitz mehrere Querschlitze aufweist, wobei sich ein jeweiliger Querschlitz mit einer Quererstreckung quer zur Längsrichtung erstreckt, und wobei die Querschlitze in Längsrichtung hintereinanderliegend und beabstandet zueinander angeordnet ausgebildet sind und der Durchströmungsschlitz zentral durch die Querschlitze verlaufend ausgebildet ist.

Bei der Ausgestaltung mit Querschlitzen hat es sich für die Zahnriemen-Profilelement-Verbindungsvorrichtung als vorteilhaft für ein gleichmäßiges Austrittsprofil der Wärmeluftströmung aus der Wärmeluftströmungs-Verteiler-Vorrichtung gezeigt, wenn eine in Längsrichtung betrachtete Breite eines jeweiligen Querschlitzes höchstens 10% des Strömungsquerschnitts des Luft-Ausbringungsabschnitts beträgt.

Ebenso von Vorteil ist es bei der Ausgestaltung mit Querschlitzen, wenn ein jeweiliger Abstand zwischen zwei benachbarten Querschlitzen höchstens 25% des Strömungsquerschnitts des Luft-Ausbringungsabschnitts beträgt.

Als mögliche Ausgestaltung für ein gleichmäßiges Austrittsprofil der Wärmeluftströmung aus der Wärmeluftströmungs-Verteiler-Vorrichtung kann dabei eine jeweilige Quererstreckung eines jeweiligen Querschlitzes wenigstens 10% und höchstens 35% des Strömungsquerschnitts des Luft-Ausbringungsabschnitts betragen.

Die Erfindung sieht in einer weiteren Ausgestaltung der ersten Luftauslassgeometrie bei der Zahnriemen-Profilelement-Verbindungsvorrichtung vor, dass die erste Luftauslassgeometrie als ein sich in Längsrichtung erstreckender und in einer Zickzacklinie verlaufender Schlitz ausgebildet ist, was sich günstig auf ein gleichmäßiges Austrittsprofil der Wärmeluftströmung aus der Wärmeluftströmungs-Verteiler-Vorrichtung auswirkt.

Bei dieser Ausgestaltung mit einem in Zickzacklinie verlaufenden Schlitz ist es für ein gleichmäßiges Strömungsprofil der Wärmeluftströmung von Vorteil, wenn der Schlitz eine Breite aufweist, welche mindestens 3% und höchstens 8% des Strömungsquerschnitts des Luft-Ausbringungsabschnitts beträgt.

Ferner sieht dabei eine Ausgestaltung vor, dass zwei jeweiligen Spitzen des in einer Zickzacklinie verlaufenden Schlitzes einen Abstand aufweisen, welcher mindestens 15% und höchstens 25% des Strömungsquerschnitts des Luft-Ausbringungsabschnitts beträgt.

Dabei kann sich gemäß einer weiteren und mit Vorteilen verbundenen Ausgestaltung der in einer Zickzacklinie verlaufende Schlitz mit einer quer zur Längsrichtung gerichteten Quererstreckung erstreckt, welche mindestens 15% und höchstens 50% des Strömungsquerschnitts des Luft-Ausbringungsabschnitts beträgt.

Fertigungstechnisch besonders günstig ist es in Ausgestaltung der Zahnriemen-Profilelement-Verbindungsvorrichtung, wenn der Verteiler-Körper der wenigstens einen Wärmeluftströmungs-Verteiler-Vorrichtung und/oder der weiteren Wärmeluftströmungs-Verteiler-Vorrichtung hohlzylindrisch ausgebildet sind/ist.

Die Erfindung sieht in Ausgestaltung der Zahnriemen-Profilelement-Verbindungsvorrichtung ferner vor, dass die erste Luftauslassgeometrie und die zweite Luftauslassgeometrie diametral zueinander angeordnet sind.

Konstruktiv einfach und kostengünstig ist es in weiterer Ausgestaltung der Zahnriemen-Profilelement-Verbindungsvorrichtung, wenn die erste Luftauslassgeometrie und die zweite Luftauslassgeometrie in Bezug auf die Längsrichtung symmetrisch zueinander ausgebildet sind.

Strömungsgünstig ist es ferner in Ausgestaltung der Zahnriemen-Profilelement-Verbindungsvorrichtung, wenn der Luft-Zuführungsabschnitt mit Bezug auf die Längsrichtung eine Zuführungs-Längserstreckung aufweist, welche kleiner ist als eine mit Bezug auf die Längsrichtung betrachtete Ausbringungs-Längserstreckung des Luft-Ausbringungsabschnitts.

Im Hinblick auf den Einsatz der Zahnriemen-Profilelement-Verbindungsvorrichtung ist es für eine vollautomatisierte Prozessführung von Vorteil, wenn eine Bewegungseinrichtung die Wärmeluftströmungs-Verteiler-Vorrichtung zumindest in Längsrichtung beweglich lagert.

In Ausgestaltung des Systems sieht die Erfindung vor, dass der Zahnriemen auf einer Fördereinrichtung eingespannt und quer zur Längsrichtung beweglich gehalten ist. Dadurch kann der Zahnriemenrücken automatisiert in eine Position verfahren werden, an welcher ein Profilelement stoffschlüssig aufgebracht werden soll.

Für das Herstellungsverfahren hat sich bei Anwendung des Prinzips der Wärmeluftströmung gezeigt, dass es ausreichend und vorteilhaft im Hinblick auf eine gleichmäßige Erwärmung von Profilelement und Zahnriemenrücken ist, wenn der vorgegebene Abstand auf mindestens 20mmund höchstens 40mm eingestellt wird.

Besonders vorteilhaft für ein vollautomatisiertes Herstellungsverfahren ist es in weiterer Ausgestaltung, wenn die Wärmeluftströmung von einer Zahnriemen-Profilelement-Verbindungsvorrichtung nach einem der Ansprüche 1 bis 15 erzeugt wird.

Dementsprechend sieht die Erfindung in weiterer, vorteilhafter Ausgestaltung des Herstellungsverfahrens vor, dass die Zahnriemen-Profilelement-Verbindungsvorrichtung zum Erwärmen zwischen dem Anbringungsabschnitt und dem Profilelementabschnitt derart angeordnet wird, dass die erste Luftauslassgeometrie auf den Anbringungsabschnitt ausgerichtet angeordnet wird und die zweite Luftauslassgeometrie auf den Profilelementabschnitt ausgerichtet angeordnet wird.

Dabei wird die vorgegebene Schmelztemperatur an den zu verbindenden Stellen von Profilelement und Zahnriemenrücken in Ausgestaltung des Herstellungsverfahrens dann erzielt, wenn zur Erreichung der vorgegebenen Schmelztemperatur von der wenigstens einen Wärmeluftströmungs-Gebläse-Vorrichtung und/oder von der weiteren Wärmeluftströmungs-Gebläse-Vorrichtung eine Wärmeluftströmung mit mindestens 300°C und höchstens 500°C zu der wenigstens einen Wärmeluftströmungs-Verteiler-Vorrichtung und/oder zu der weiteren Wärmeluftströmungs-Verteiler-Vorrichtung gefördert werden/wird.

Dabei ist zu es ferner von Vorteil, wenn von der Wärmeluftströmungs-Gebläse-Vorrichtung eine Wärmeluftströmung mit einem vorgegebenen Druck von wenigstens 0,5bar und höchstens 1bar zu der Wärmeluftströmungs-Verteiler-Vorrichtung gefördert wird.

Bei dieser Temperatur und/oder bei diesem vorgegebenen Druck und/oder bei dem vorgegebenen Abstand ist es ferner ausreichend, wenn in Ausgestaltung des Herstellungsverfahrens der Anbringungsabschnitt und der Profilelementabschnitt für die Zeitdauer von wenigstens 10 Sekunden und höchstens 30 Sekunden auf die vorgegebene Schmelztemperatur erwärmt werden.

Schließlich ist in Ausgestaltung des Herstellungsverfahrens vorgesehen, dass vor dem Anordnen des anzubringenden Profilelements ein beweglich ausgebildeter Robotergreifarm einer Robotervorrichtung das anzubringende Profilelement ergreift und dann das ergriffene Profilelement in dem vorgegebenen Abstand zu dem Zahnriemenrücken des Zahnriemens anordnet.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 eine perspektivische Ansicht auf ein System zur stoffschlüssigen Anbringung eines Profilelements auf einem Zahnriemen, wobei das System eine Robotervorrichtung und eine Zahnriemen-Profilelement-Verbindungsvorrichtung aufweist,
Figur 2 eine perspektivische Ansicht auf die in Figur 1 gezeigte Zahnriemen-Profilelement-Verbindungsvorrichtung,
Figur 3 eine perspektivische Detailansicht auf eine Wärmeluftströmungs-Verteiler-Vorrichtung der Zahnriemen-Profilelement-Verbindungsvorrichtung, welche zwischen einem Zahnriemenrücken eines Zahnriemens und einem auf dem Zahnriemenrücken stoffschlüssig anzubringenden Profilelement angeordnet ist,
Figur 4 eine perspektivische Ansicht auf eine Wärmeluftströmungs-Verteiler-Vorrichtung gemäß eines ersten Ausführungsbeispiels,
Figur 5 eine perspektivische Schnittansicht der in Figur 4 gezeigten Wärmeluftströmungs-Verteiler-Vorrichtung,
Figur 6 eine Schnittansicht in Draufsicht auf die in Figur 4 gezeigten Wärmeluftströmungs-Verteiler-Vorrichtung,
Figur 7 eine perspektivische Ansicht auf eine Wärmeluftströmungs-Verteiler-Vorrichtung gemäß eines zweiten Ausführungsbeispiels,
Figur 8 eine perspektivische Schnittansicht der in Figur 7 gezeigten Wärmeluftströmungs-Verteiler-Vorrichtung,
Figur 9 eine Schnittansicht in Draufsicht auf die in Figur 7 gezeigten Wärmeluftströmungs-Verteiler-Vorrichtung,
Figur 10 eine Schnittansicht in Draufsicht auf eine Wärmeluftströmungs-Verteiler-Vorrichtung gemäß eines dritten Ausführungsbeispiels,
Figur 11 eine Schnittansicht in Draufsicht auf eine Wärmeluftströmungs-Verteiler-Vorrichtung gemäß eines vierten Ausführungsbeispiels,
Figur 12 eine Schnittansicht in Draufsicht auf eine Wärmeluftströmungs-Verteiler-Vorrichtung gemäß eines fünften Ausführungsbeispiels,
Figur 13 eine perspektivische Ansicht auf eine Wärmeluftströmungs-Verteiler-Vorrichtung gemäß eines sechsten Ausführungsbeispiels,
Figur 14 eine perspektivische Schnittansicht der in Figur 13 gezeigten Wärmeluftströmungs-Verteiler-Vorrichtung,
Figur 15 eine Schnittansicht in Draufsicht auf die in Figur 13 gezeigten Wärmeluftströmungs-Verteiler-Vorrichtung,
Figur 16 eine perspektivische Ansicht auf eine Wärmeluftströmungs-Verteiler-Vorrichtung gemäß eines siebten Ausführungsbeispiels,
Figur 17 eine perspektivische Schnittansicht der in Figur 16 gezeigten Wärmeluftströmungs-Verteiler-Vorrichtung und
Figur 18 eine Schnittansicht in Draufsicht auf die in Figur 16 gezeigten Wärmeluftströmungs-Verteiler-Vorrichtung.

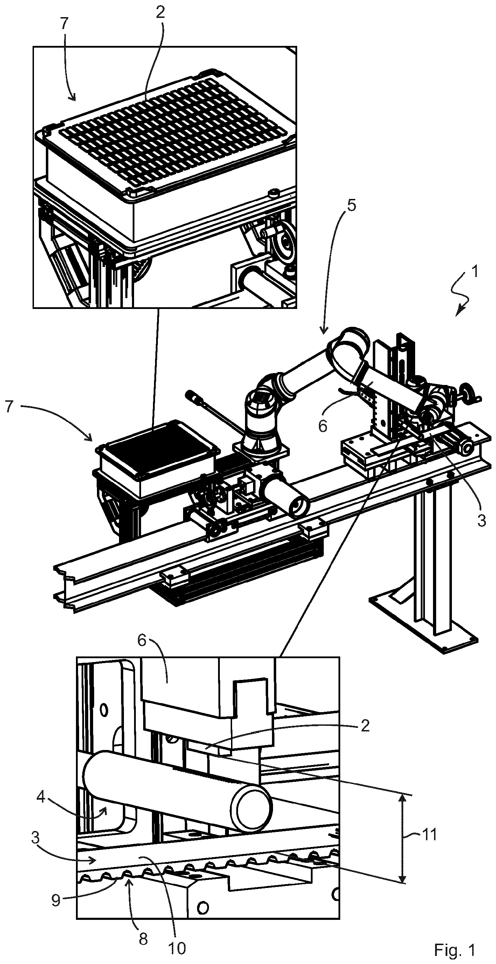

In Figur 1 ist in schematischer Darstellung ein System 1 zur stoffschlüssigen Anbringung eines Profilelements 2 auf einem Zahnriemen 3 zu sehen. Das System 1 weist eine Zahnriemen-Profilelement-Verbindungsvorrichtung 4 und eine Robotervorrichtung 5 auf, wobei die Zahnriemen-Profilelement-Verbindungsvorrichtung 4 zum stoffschlüssigen Anbringen des Profilelements 2 auf dem Zahnriemen 3 ausgebildet ist. Die Robotervorrichtung 5 weist einen beweglich ausgebildeten Robotergreifarm 6 auf, welcher zum Anordnen des anzubringenden Profilelements 2 ausgebildet ist. Wie der Figur 1 ferner zu entnehmen ist, ist eine Bevorratungseinheit 7 vorgesehen, in welcher eine Vielzahl von Profilelementen 2 bevorratet untergebracht sind, wobei das entsprechende Bezugszeichen in der Detailansicht der Figur 1 nur einem einzigen Profilelement 2 zugewiesen ist, obgleich sich in der Bevorratungseinheit 7 eine Vielzahl von Profilelementen 2 befinden. Zur Anbringung eines Profilelements 2 auf dem Zahnriemen 3 entnimmt die Robotervorrichtung 5 mit Hilfe ihres Robotergreifarms 6 ein anzubringendes Profilelement 2 aus der Bevorratungseinheit 7, die in der oberen Detailansicht der Figur 1 gezeigt ist, und bewegt das aus der Bevorratungseinheit 7 entnommene und anzubringende Profilelement 2 zu dem Zahnriemen 3. Der Robotergreifarm 6 der Robotervorrichtung 5 ist somit beweglich und insbesondere drehbeweglich ausgebildet. Der Zahnriemen 3, welcher eine Zahnseite 8 mit einer Bezahnung 9 und einen rückseitig der Zahnseite 8 befindlichen Zahnriemenrücken 10 aufweist, ist auf einer in den Figuren nicht näher dargestellten Fördereinrichtung eingespannt und entsprechend beweglich gehalten, damit der Zahnriemen 3 entsprechend weiterbewegt werden kann, um ein weiteres Profilelement 2 auf dem Zahnriemen 2 an einer anderen Position zu befestigen. Die untere Detailansicht der Figur 1 zeigt eine Anordnung, in welcher der Robotergreifarm 6 ein anzubringendes Profil 2 in einem vorgegebenen Abstand 11 zu dem Zahnriemenrücken 10 angeordnet hält, wobei die zur stoffschlüssigen Anbringung ausgebildete Zahnriemen-Profilelement-Verbindungsvorrichtung 4 zwischen dem anzubringenden Profilelement 2 und dem Zahnriemen 3 angeordnet ist. Ein erster Teilabstand 11a, welcher dem Abstand zwischen dem anzubringenden Profilelement 2 und der Zahnriemen-Profilelement-Verbindungsvorrichtung 4 entspricht, und ein zweiter Teilabstand 11b, welcher dem Abstand zwischen dem Zahnriemen 2 und der Zahnriemen-Profilelement-Verbindungsvorrichtung 4 entspricht, sind vorgegeben, wobei der erste und zweite Teilabstand 11a, 11b aus Figur 34 ersichtlich sind. In der in Figur 1 dargestellten Anordnung des Systems 1 sind die Robotervorrichtung 5, die Zahnriemen-Profilelement-Verbindungsvorrichtung 4 und die Bevorratungseinheit 7 an einem gemeinsamen Träger 12 angebracht, wobei auch eine separate Anbringung der genannten Bauteile des Systems 1 an unterschiedlichen Trägerelementen denkbar ist.

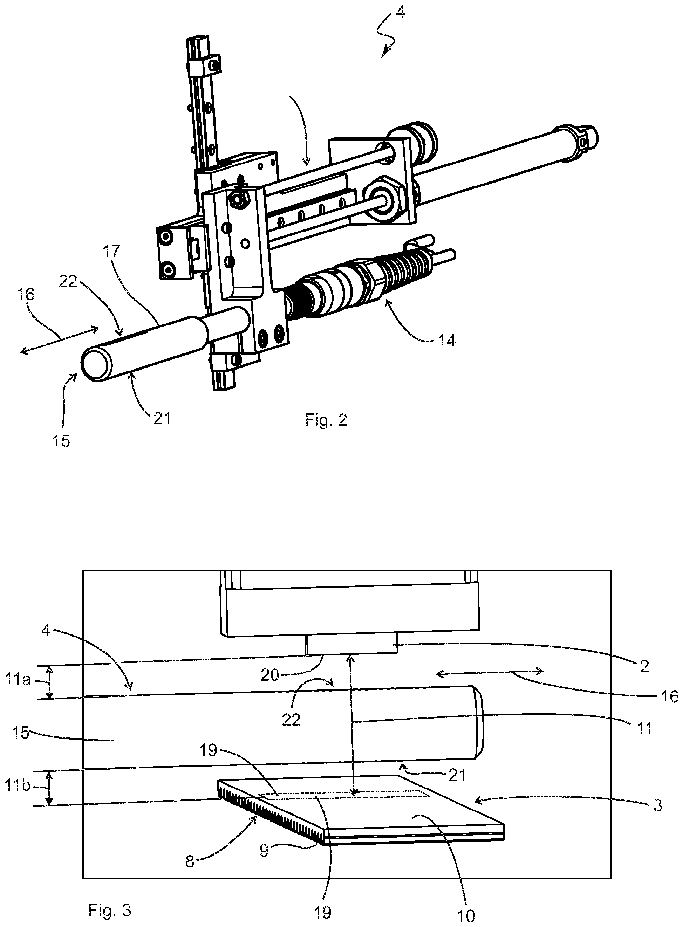

Mit Hilfe des vorstehend beschriebenen Systems 1 wird somit das Profilelement 2 auf dem Zahnriemen 3 stoffschlüssig angebracht, wobei zur Anbringung neben der Robotervorrichtung 5 zusätzlich die Zahnriemen-Profilelement-Verbindungsvorrichtung 4 dient. Die Zahnriemen-Profilelement-Verbindungsvorrichtung 4 ist in Figur 2 näher dargestellt und weist eine zur Erzeugung von einer Wärmeluftströmung ausgebildete Wärmeluftströmungs-Gebläse-Vorrichtung 14 und eine mit der Wärmeluftströmungs-Gebläse-Vorrichtung 14 strömungsverbundene Wärmeluftströmungs-Verteiler-Vorrichtung 15 auf. Die Wärmeluftströmungs-Verteiler-Vorrichtung 15 weist einen sich in eine Längsrichtung 16 erstreckenden Verteiler-Körper 17 auf, welcher derart ausgebildet ist, dass er eine von der Wärmeluftströmungs-Gebläse-Vorrichtung 14 erzeugte und zu der Wärmeluftströmungs-Verteiler-Vorrichtung 15 geförderte Wärmeluftströmung auf entsprechend zu verbindende Stellen des Profilelements 2 und des Zahnriemens 3 richtet, um das Material der zu verbindenden Stellen aufzuschmelzen, bevor die Stellen dann gegeneinander gedrückt und durch Erkalten verbunden werden. Damit das Profilelement 2 und der Zahnriemen 3 gegeneinander gedrückt werden können, muss zumindest die Wärmeluftströmungs-Verteiler-Vorrichtung 15 zwischen den beiden Teilen herausbewegt werden, wozu eine Bewegungseinrichtung 18 vorgesehen ist, welche die Wärmeluftströmungs-Verteiler-Vorrichtung 15 zumindest in Längsrichtung 16 beweglich lagert, so dass die Wärmeluftströmungs-Verteiler-Vorrichtung 15 aus dem Zwischenraum zwischen dem Profilelement 2 und dem Zahnriemen 3 herausbewegt werden kann.

Die stoffschlüssige Anbringung des Profilelements 2 auf dem Zahnriemen 3 folgt dabei einzelnen Schritten eines Herstellungsverfahrens, welches mit Hilfe des Systems 1 und insbesondere der Zahnriemen-Profilelement-Verbindungsvorrichtung 4 durchgeführt wird. Bei dem Herstellungsverfahren gemäß der Erfindung wird in einem ersten Schritt das anzubringende Profilelement 2 in einem vorgegebenen Abstand 11 zu dem Zahnriemenrücken 10 des Zahnriemens 3 angeordnet, wie es zum Beispiel in Figur 3 gezeigt ist. Nach dem Anordnen werden dann ein für das anzubringende Profilelement 2 vorgesehener Anbringungsabschnitt 19 auf dem Zahnriemenrücken 10 und ein auf dem Anbringungsabschnitt 19 anzubringender Profilelementabschnitt 20 des anzubringenden Profilelements 2 mittels Wärmeluftströmung auf eine vorgegebene Schmelztemperatur für eine vorgegebene Zeitdauer erwärmt (siehe zum Beispiel Figur 3). Nach dem Erwärmen auf die vorgegebene Schmelztemperatur für die vorgegebene Zeitdauer wird dann der Profilelementabschnitt 20 auf den Anbringungsabschnitt 19 aufgesetzt.

Bei einer Vielzahl von Anwendungsfällen hat es sich als ausreichend erwiesen, wenn für das Herstellungsverfahren der vorgegebene Abstand 11 zwischen Profilelement 2 und dem Zahnriemenrücken 10 auf mindestens 20mm und höchstens 40mm eingestellt wird, wobei der Teilabstand 11a (Abstand zwischen dem Profilelement 2 und der Wärmeluftströmungs-Verteiler-Vorrichtung 15) und der Teilabstand 11b (Abstand zwischen dem Zahnriemen 3 bzw. Zahnriemenrücken 10 und der Wärmeluftströmungs-Verteiler-Vorrichtung 15) jeweils mindestens 1mm und höchstens 4mm betragen. Das Profilelement 2 und der Zahnriemen 3 bestehen in dem dargestellten Ausführungsbeispiel - wie es bei den technisch relevanten Anwendungen der Fall ist - aus thermoplastischem Polyurethan, so dass zum Aufschmelzen des Profilabschnitts 20 und des Anbringungsabschnitts 19 die vorgegebene Schmelztemperatur je nach Polyurethantype ca. 200°C beträgt. Das Erreichen der Schmelztemperatur wird dabei durch die Zahnriemen-Profilelement-Verbindungsvorrichtung 4 sichergestellt, wobei die Wärmeluftströmungs-Gebläse-Vorrichtung 15 eine Wärmeluftströmung mit mindestens 300°C und höchstens 500°C zu der Wärmeluftströmungs-Verteiler-Vorrichtung 14 fördern muss. Damit keine auf dem Anbringungsabschnitt 19 und/oder dem Profilabschnitt 20 erzeugte Schmelze von der Wärmeluftströmung hinfort geblasen wird, wird dabei von der Wärmeluftströmungs-Gebläse-Vorrichtung zusätzlich die Wärmeluftströmung mit einem vorgegebenen Druck von wenigstens 0,5bar und höchstens 1bar zu der Wärmeluftströmungs-Verteiler-Vorrichtung gefördert, wobei die Wärmeluftströmung mit Hilfe der Zahnriemen-Profilelement-Verbindungsvorrichtung 4 derart einzustellen ist, dass zumindest der Anbringungsabschnitt 19 und der Profilelementabschnitt 20 für die Zeitdauer von wenigstens 10 Sekunden und höchstens 30 Sekunden auf die vorgegebene Schmelztemperatur erwärmt werden. Zur Ausrichtung der Wärmeluftströmung auf den Anbringungsabschnitt 19 und den Profilelementabschnitt 20 weist der Verteiler-Körper 17 der Wärmeluftströmungs-Verteiler-Vorrichtung 15 eine erste Luftauslassgeometrie 21 und eine zweite Luftauslassgeometrie 22 auf, auf welche nachstehend noch im Detail eingegangen wird und welche in Figur 3 nur angedeutet sind. Dementsprechend wird bei dem erfindungsgemäßen Herstellungsverfahren die Zahnriemen-Profilelement-Verbindungsvorrichtung 4 zum Erwärmen zwischen dem Anbringungsabschnitt 19 und dem Profilelementabschnitt 20 derart angeordnet, dass die erste Luftauslassgeometrie 21 auf den Anbringungsabschnitt 19 ausgerichtet angeordnet wird und die zweite Luftauslassgeometrie 22 auf den Profilelementabschnitt 20 ausgerichtet angeordnet wird. Hinsichtlich des erfindungsgemäßen Herstellungsverfahrens sei noch erwähnt, dass vor dem Anordnen des anzubringenden Profilelements 2 der beweglich ausgebildete Robotergreifarm 6 der Robotervorrichtung 5 das anzubringende Profilelement 2 ergreift und dann das ergriffene Profilelement 2 in dem vorgegebenen Abstand 11 zu dem Zahnriemenrücken 10 des Zahnriemens 3 anordnet. Vor dem Anbringen des Profilelements 2 wird dann die Wärmeluftströmungs-Verbindungsvorrichtung 15 in Längsrichtung 16 aus dem Zwischenraum zwischen Profilelement 2 und Zahnriemen 3 mit Hilfe der Bewegungseinrichtung 18 herausbewegt. Dabei braucht nicht ausführlich ausgeführt werden, dass nach dem Erwärmen auf die vorgegebene Schmelztemperatur für die vorgegebene Zeitdauer und nach Herausbewegen der Wärmeluftströmungs-Verbindungsvorrichtung 15 aus dem Zwischenraum mit Hilfe des beweglich ausgebildeten Robotergreifarms 6 der Robotervorrichtung 5 der Profilelementabschnitt 20 auf den Anbringungsabschnitt 19 aufgesetzt wird. Anschließend kann die Anbringung eines weiteren Profilelements 2 auf dem Zahnriemen 3 erfolgen, wozu zunächst der Zahnriemen 3 quer zur Längsrichtung 16 bewegt und so positioniert wird, dass die Robotervorrichtung 5 ein neu anzubringendes Profilelement 2 oberhalb des nun vorgesehenen Anbringungsabschnitts 19 anordnen kann.

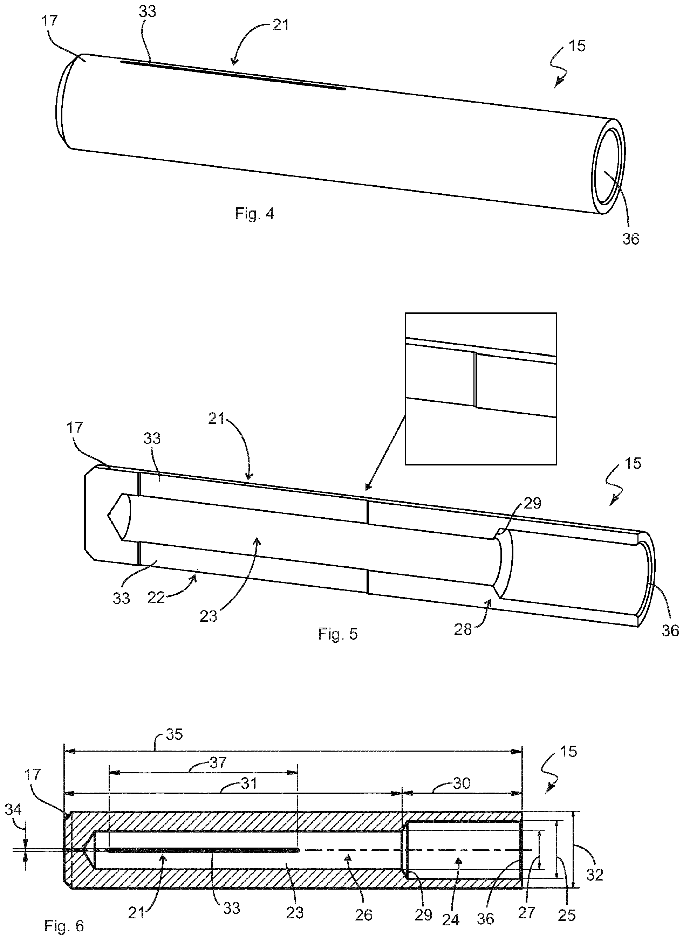

Nachstehend werden nun die Figuren 4 bis 18 beschrieben, in denen verschiedene Ausführungsbeispiele für die Wärmeluftströmungs-Verbindungsvorrichtung 15 und insbesondere für die erste und zweite Luftauslassgeometrie 21, 22 des Verteiler-Körpers 17 gezeigt sind. Dabei ist zu beachten, dass sich die nachstehende Beschreibung auf die konstruktive Ausgestaltung der ersten Luftauslassgeometrie 21 bezieht. Die nachstehende Beschreibung zu der ersten Luftauslassgeometrie 21 gilt aber auch für die zweite Luftauslassgeometrie 22, die für jedes in den Figuren gezeigte Ausführungsbeispiel identisch zu der ersten Luftauslassgeometrie 21 ausgebildet ist. Auch wenn es in den Figuren nicht gezeigt und nachstehend nicht im Detail angesprochen ist, so versteht es sich, dass eine zweite Luftauslassgeometrie 22 eines Ausführungsbeispiels mit einer ersten Luftauslassgeometrie 21 eines anderen Ausführungsbeispiels kombiniert werden kann.

Bei allen in den Figuren 4 bis 18 gezeigten Ausführungsbeispielen ist der Verteiler-Körper 17 der Wärmeluftströmungs-Verteiler-Vorrichtung 15 innen hohl mit einer Verteiler-Kammer 23 ausgebildet, wie es beispielsweise aus den Schnittdarstellungen der Figuren 6, 9, 10, 11, 12, 15 und 18 hervorgeht, wobei der Verteiler-Körper 17 die erste Luftauslassgeometrie 21, welche in die Längsrichtung 16 ausgerichtet ausgebildet ist und welche mit der Verteiler-Kammer 23 strömungsverbunden ist, und die zweite Luftauslassgeometrie 22, welche in die Längsrichtung 16 ausgerichtet ausgebildet ist und welche mit der Verteiler-Kammer 23 strömungsverbunden ist, aufweist. Bei allen Ausführungsbeispielen sind ferner die erste Luftauslassgeometrie 21 und die zweite Luftauslassgeometrie 22 sich gegenüberliegend angeordnet. Wie ferner den Schnittdarstellungen der Figuren 6, 9, 10, 11, 12, 15 und 18 zu entnehmen ist, ist der Verteiler-Körper 17 in einen Luft-Zuführungsabschnitt 24 mit einem Durchströmungsquerschnitt 25 und einen Luft-Ausbringungsabschnitt 26 mit einem Strömungsquerschnitt 27 unterteilt. Hierbei weist der Luft-Zuführungsabschnitt 24 mit Bezug auf die Längsrichtung 16 eine Zuführungs-Längserstreckung 30 auf, welche kleiner ausgebildet ist als eine mit Bezug auf die Längsrichtung 16 betrachtete Ausbringungs-Längserstreckung 31 des Luft-Ausbringungsabschnitts 26 (siehe zum Beispiel Figuren 6, 9, 10, 11, 12, 15 und 18). Die Zuführungs-Längserstreckung 30 des Luft-Zuführungsabschnitt 24 beträgt bei den gezeigten Ausführungsbeispielen 30% bis 35% der Ausbringungs-Längserstreckung 31 des Luft-Ausbringungsabschnitts 26. Ferner sind die erste Luftauslassgeometrie 21 und die zweite Luftauslassgeometrie 22 in dem Luft-Ausbringungsabschnitt 26 ausgebildet und angeordnet, wobei der Luft-Zuführungsabschnitt 24 mit der Wärmeluftströmungs-Gebläse-Vorrichtung 14 strömungsverbunden ist. Aus den Schnittdarstellungen der verschiedenen Ausführungsbeispiele ist ferner zu erkennen, dass der Durchströmungsquerschnitt 25 größer ausgebildet ist als der Strömungsquerschnitt 27. In den gezeigten Ausführungsbeispielen ist der Durchströmungsquerschnitt 25 1,5-mal so groß ausgebildet wie der Strömungsquerschnitt 27, wobei ein Übergang 28 von dem Strömungsquerschnitt 27 zu dem Durchströmungsquerschnitt 25 als eine Stufe 29 ausgebildet ist. An der Stufe 29 liegt ein Verbindungsstutzen der Wärmeluftströmungs-Gebläse-Vorrichtung 14 an, wobei der Verbindungsstutzen in den Durchströmungsquerschnitt 27 bis zu der Stufe 29 eingeschoben ist. Bei den in den Figuren 4 bis 18 gezeigten Ausführungsbeispielen ist ferner der Verteiler-Körper 17 hohlzylindrisch ausgebildet, so dass der Durchströmungsquerschnitt 25 und der Strömungsquerschnitt einem jeweiligen Innendurchmesser entsprechen. Dementsprechend ist der Außendurchmesser 32 des Verteiler-Körpers 17 doppelt so groß wie der Innendurchmesser bzw. Strömungsquerschnitt 27 des Luft-Ausbringungsabschnitts 26. Bei einer zylinderförmigen Ausgestaltung des Verteiler-Körpers 17 sind dann die erste Luftauslassgeometrie 21 und die zweite Luftauslassgeometrie 22 diametral zueinander angeordnet. Schließlich weisen alle Ausführungsbeispiele als Gemeinsamkeit auf, dass die erste Luftauslassgeometrie 21 und die zweite Luftauslassgeometrie 22 in Bezug auf die Längsrichtung 16 symmetrisch zueinander ausgebildet sind.

Nachstehend wird nun Bezug auf die einzelnen Ausführungsbeispiele genommen.

In den Figuren 4, 5 und 6 ist ein erstes Ausführungsbeispiel gezeigt, bei welchem die erste Luftauslassgeometrie 21 als ein Durchströmungsschlitz 33 ausgebildet ist, welcher sich in die Längsrichtung 16 erstreckt. Die zweite Luftauslassgeometrie 22 ist spiegelsymmetrisch ausgebildet und weist dementsprechend auch einen Durchströmungsschlitz 33 auf, wie der Schnittdarstellung der Figur 5 zu entnehmen ist. Dieser Durchströmungsschlitz 33, welcher die erste und zweite Luftauslassgeometrie 21 und 22 bei diesem ersten Ausführungsbeispiel kennzeichnet, weist dabei eine Schlitzbreite 34 auf, die konstant ausgebildet ist. Die Schlitzbreite 34 des Durchströmungsschlitzes 33 entspricht mindestens 3% und höchstens 10% des Strömungsquerschnitts 27 des Luft-Ausbringungsabschnitts 26. Der Verteiler-Körper 17 der Wärmeluftströmungs-Verteiler-Vorrichtung 15 weist eine Gesamt-Längserstreckung 35 auf, welche dem 12-fachen des Innendurchmessers des Luft-Ausbringungsabschnitts 26 bzw. des Strömungsquerschnitts 27 entspricht. Die Schlitzlänge 37 des Durchströmungsschlitzes 33 beträgt um die 40% der Gesamt-Längserstreckung 35, wobei sich der Durchströmungsschlitz 33 bei ca. 50% der Gesamt-Längserstreckung 35 in eine von dem offenen und mit der Wärmeluftströmungs-Gebläse-Vorrichtung 14 strömungsverbundenen Längsende 36 des Verteiler-Körpers 17 wegweisende Richtung erstreckt.

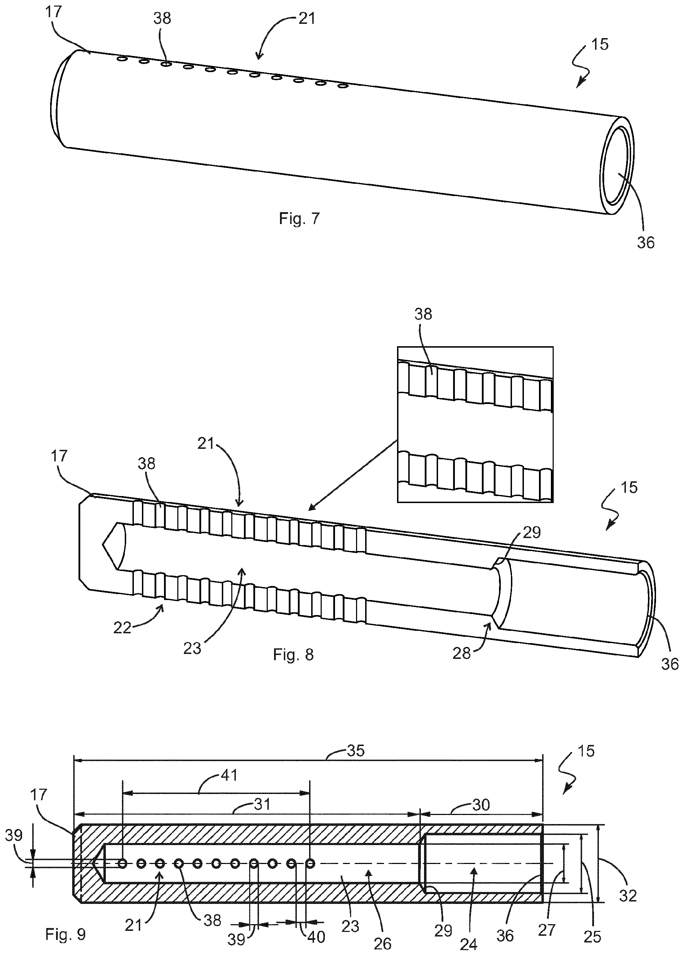

Die Figuren 7, 8 und 9 zeigen ein zweites Ausführungsbeispiel, bei welchem die erste Luftauslassgeometrie 21 mehrere Durchströmungsbohrungen 38 aufweist, wobei das Bezugszeichen "38" in den Figuren 7, 8 und 9 aus Gründen der Übersichtlichkeit nur auf eine einzige Durchströmungsbohrung gerichtet ist. Die Durchströmungsbohrungen 38, von denen bei dem zweiten Ausführungsbeispiel insgesamt elf Stück vorhanden sind, sind beabstandet zueinander und in Längsrichtung 16 hintereinanderliegend angeordnet, wie es den entsprechenden Figuren zu entnehmen ist. Die zweite Luftauslassgeometrie 22 ist spiegelsymmetrisch zu der ersten Luftauslassgeometrie 21 ausgebildet und weist dementsprechend auch mehrere Durchströmungsbohrungen 38 auf, die in Längsrichtung 16 hintereinanderliegend angeordnet. Diese Durchströmungsbohrungen 38, welche die erste und zweite Luftauslassgeometrie 21 und 22 bei diesem zweiten Ausführungsbeispiel kennzeichnen, sind mit gleichen Durchmessern 39 ausgebildet, wobei ein jeweiliger Durchmesser 39 höchstens 35% des Strömungsquerschnitts 27 des Luft-Ausbringungsabschnitts 26 beträgt. Dabei weisen die Durchströmungsbohrungen 38 einen konstanten Zwischenraum 40 zwischen sich auf, welcher mindestens 40% und höchstens 50% des Strömungsquerschnitts 27 des Luft-Ausbringungsabschnitts 26 beträgt. Auch bei dem zweiten Ausführungsbeispiel weist der Verteiler-Körper 17 der Wärmeluftströmungs-Verteiler-Vorrichtung 15 eine Gesamt-Längserstreckung 35 auf, welche dem 12-fachen des Innendurchmessers des Luft-Ausbringungsabschnitts 26 bzw. des Strömungsquerschnitts 27 entspricht. Die Länge 41, über welche die Durchströmungsbohrungen 38 in Längsrichtung 16 angeordnet sind, beträgt um die 40% der Gesamt-Längserstreckung 35, wobei eine erste Durchströmungsbohrung 38 bei etwa 50% der Gesamt-Längserstreckung 35 angeordnet ist und die weiteren Durchströmungsbohrungen 38 hintereinanderliegend in eine von dem offenen und mit der Wärmeluftströmungs-Gebläse-Vorrichtung 14 strömungsverbundenen Längsende 36 des Verteiler-Körpers 17 wegweisende Richtung angeordnet sind.

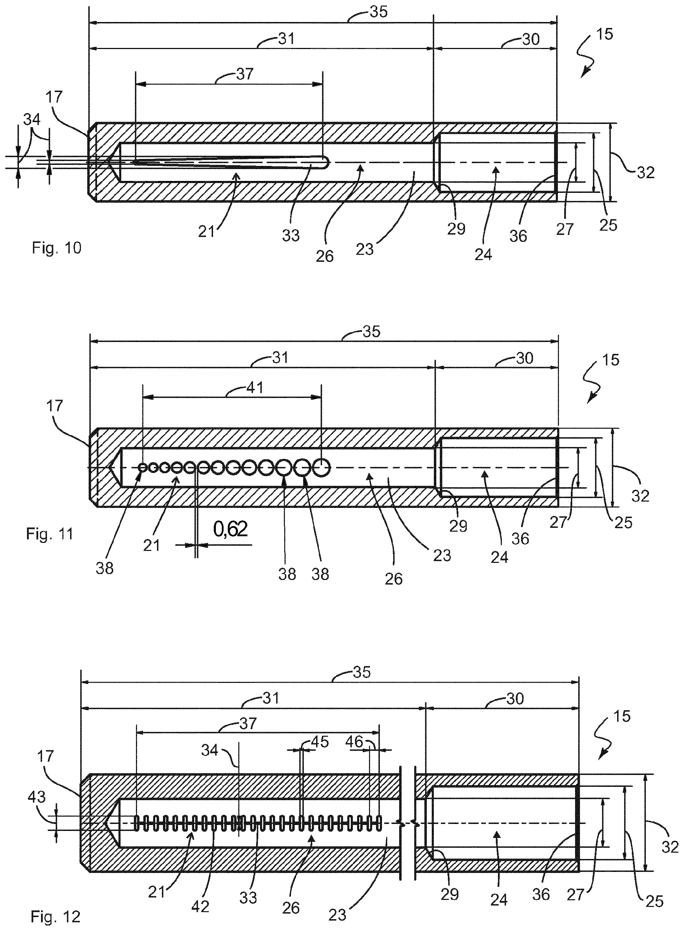

Die Figur 10 zeigt eine geschnittene Draufsicht auf ein drittes Ausführungsbeispiel, bei welchem die erste Luftauslassgeometrie 21 wiederum als ein Durchströmungsschlitz 33 ausgebildet ist, welcher sich in die Längsrichtung 16 erstreckt. Auch bei diesem Ausführungsbeispiel ist die zweite Luftauslassgeometrie 22 spiegelsymmetrisch ausgebildet und weist dementsprechend auch einen in der Figur 10 nicht gezeigten Durchströmungsschlitz 33 auf. Dieser Durchströmungsschlitz 33, welcher die erste und zweite Luftauslassgeometrie 21 und 22 bei diesem dritten Ausführungsbeispiel kennzeichnet, weist dabei eine Schlitzbreite 34 auf, welche in eine von dem Luft-Zuführungsabschnitt 24 wegweisende Richtung abnehmend ausgebildet ist. Die Schlitzbreite 34 ist hierbei von höchstens 35% des Strömungsquerschnitts 27 des Luft-Ausbringungsabschnitts 26 bis hin zu wenigstens 5% und höchstens 10% des Strömungsquerschnitts 27 des Luft-Ausbringungsabschnitts 26 abnehmend ausgebildet. Auch bei dem dritten Ausführungsbeispiel weist der Verteiler-Körper 17 der Wärmeluftströmungs-Verteiler-Vorrichtung 15 eine Gesamt-Längserstreckung 35 auf, welche dem 12-fachen des Innendurchmessers des Luft-Ausbringungsabschnitts 26 bzw. des Strömungsquerschnitts 27 entspricht. Die Schlitzlänge 37 des Durchströmungsschlitzes 33 beträgt - wie bei dem ersten Ausführungsbeispiel auch - um die 40% der Gesamt-Längserstreckung 35, wobei sich der Durchströmungsschlitz 33 bei ca. 50% der Gesamt-Längserstreckung 35 in eine von dem offenen und mit der Wärmeluftströmungs-Gebläse-Vorrichtung 14 strömungsverbundenen Längsende 36 des Verteiler-Körpers 17 wegweisende Richtung erstreckt.

In Figur 11 ist ein viertes Ausführungsbeispiel gezeigt, bei welchem die erste Luftauslassgeometrie 21 auch wieder mehrere Durchströmungsbohrungen 38 aufweist, wie es bei dem zweiten Ausführungsbeispiel der Fall ist. Auch sind die Durchströmungsbohrungen 38 wieder beabstandet zueinander und in Längsrichtung 16 hintereinanderliegend angeordnet, wobei die in Figur 11 nicht gezeigte zweite Luftauslassgeometrie 22 spiegelsymmetrisch zu der ersten Luftauslassgeometrie 21 ausgebildet ist und dementsprechend auch mehrere Durchströmungsbohrungen 38 aufweist, die in Längsrichtung 16 hintereinanderliegend angeordnet. Diese Durchströmungsbohrungen 38, welche die erste und zweite Luftauslassgeometrie 21 und 22 bei diesem vierten Ausführungsbeispiel kennzeichnen und von denen in dem gezeigten Ausführungsbeispiel insgesamt dreizehn Durchströmungsbohrungen 38 je Luftauslassgeometrie vorgesehen sind, sind mit unterschiedlichen Durchmessern 39 ausgebildet. Genauer gesagt sind die Durchströmungsbohrungen 38 mit in eine von dem Luft-Zuführungsabschnitt 24 wegweisende Richtung abnehmend ausgebildeten Durchmessern 39 ausgebildet. Die abnehmend ausgebildeten Durchmesser 39 betragen dabei wenigstens 15% und höchstens 45% des Strömungsquerschnitts 27 des Luft-Ausbringungsabschnitts 26. Bei dem vierten Ausführungsbeispiel weist der Verteiler-Körper 17 der Wärmeluftströmungs-Verteiler-Vorrichtung 15 eine Gesamt-Längserstreckung 35 auf, welche wenigstens dem 12-fachen des Innendurchmessers des Luft-Ausbringungsabschnitts 26 bzw. des Strömungsquerschnitts 27 entspricht. Die Länge 41, über welche die Durchströmungsbohrungen 38 in Längsrichtung 16 angeordnet sind, beträgt wenigstens 40% der Gesamt-Längserstreckung 35, wobei eine erste Durchströmungsbohrung 38 bei etwa 50% der Gesamt-Längserstreckung 35 angeordnet ist und die weiteren Durchströmungsbohrungen 38 hintereinanderliegend in eine von dem offenen und mit der Wärmeluftströmungs-Gebläse-Vorrichtung 14 strömungsverbundenen Längsende 36 des Verteiler-Körpers 17 wegweisende Richtung angeordnet sind.

Die Figur 12 zeigt eine geschnittene Draufsicht auf ein fünftes Ausführungsbeispiel, bei welchem die erste Luftauslassgeometrie 21 einen Durchströmungsschlitz 33 aufweist, welcher sich in die Längsrichtung 16 erstreckt. Dieser Durchströmungsschlitz 33 weist dabei eine Schlitzbreite 34 auf, die konstant ausgebildet ist. Die Schlitzbreite 34 des Durchströmungsschlitzes 33 entspricht höchstens 5% des Strömungsquerschnitts 27 des Luft-Ausbringungsabschnitts 26. Bei diesem fünften Ausführungsbeispiel weist die erste Luftauslassgeometrie 21 zusätzlich mehrere Querschlitze 42 auf, wobei sich ein jeweiliger Querschlitz 42 mit einer Quererstreckung 43 quer zur Längsrichtung 16 erstreckt. Die Querschlitze 42 sind in Längsrichtung 16 hintereinanderliegend und beabstandet zueinander angeordnet ausgebildet, wobei der Durchströmungsschlitz 33 zentral durch die Querschlitze 42 verlaufend ausgebildet ist.

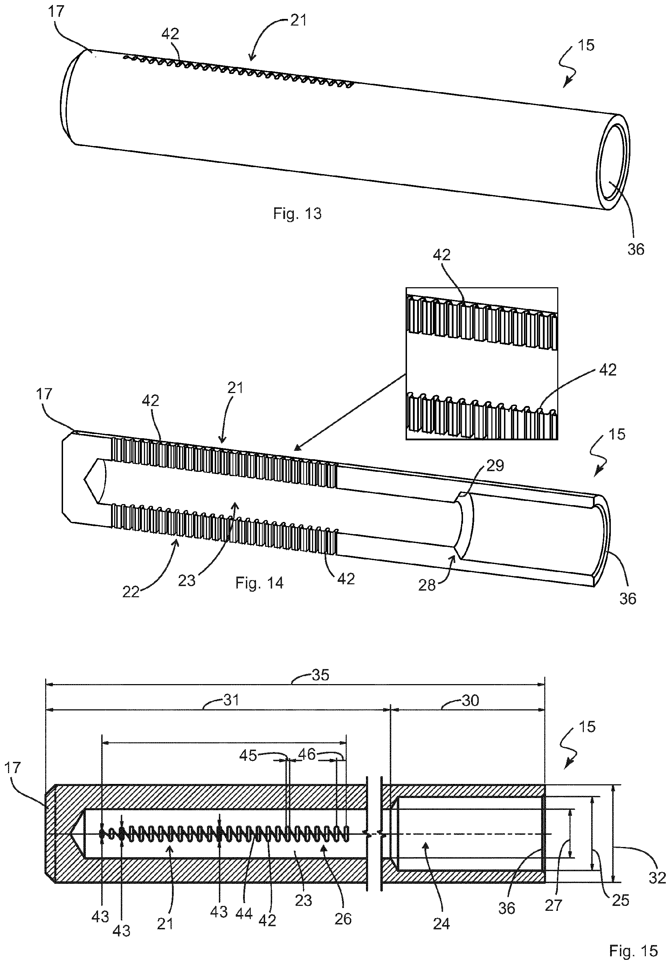

Auch bei dem in den Figuren 13, 14 und 15 gezeigten sechsten Ausführungsbeispiel weist die erste Luftauslassgeometrie 21 mehrere Querschlitze 42 auf, wobei sich ein jeweiliger Querschlitz 42 mit einer Quererstreckung 43 quer zur Längsrichtung 16 erstreckt. Die Querschlitze 42 sind in Längsrichtung 16 hintereinanderliegend und beabstandet zueinander angeordnet ausgebildet, wobei bei dem sechsten Ausführungsbeispiel kein Durchströmungsschlitz 33 vorgesehen ist. Stattdessen sind zum Beispiel in Figur 15 einzelne Verbindungsschnitte 44 zwischen zwei benachbarten Querschlitzen 42 zu sehen, welche aufgrund des Herstellens (Drahterodieren) der einzelnen Querschlitze 42 bedingt sind.

Bei dem fünften und sechsten Ausführungsbeispiel beträgt eine in Längsrichtung 16 betrachtete Breite 45 eines jeweiligen Querschlitzes 42 höchstens 10% des Strömungsquerschnitts 27 des Luft-Ausbringungsabschnitts 26. Ebenso beträgt bei dem fünften und sechsten Ausführungsbeispiel ein jeweiliger Abstand 46 zwischen zwei benachbarten Querschlitzen 42 höchstens 25% des Strömungsquerschnitts 27 des Luft-Ausbringungsabschnitts 26. Zusätzlich haben das fünfte und sechste Ausführungsbeispiel gemein, dass eine jeweilige Quererstreckung 43 eines jeweiligen Querschlitzes 42 wenigstens 10% und höchstens 35% des Strömungsquerschnitts 27 des Luft-Ausbringungsabschnitts 26 beträgt. Dabei ist bei dem fünften Ausführungsbeispiel die Quererstreckung 43 für jeden Querschlitz 42 mit identischer Länge ausgebildet, wohingegen bei dem sechsten Ausführungsbeispiel die Quererstreckung 43 für die letzten drei Querschlitze 42 an dem Ende der ersten Luftauslassgeometrie 21, welches dem Luft-Zuführungsabschnitt 24 abgewandt ist, mit einer abnehmenden Quererstreckung 43 ausgebildet ist, wobei die abnehmende Quererstreckung 43 aber nicht weniger als 10% des Strömungsquerschnitts 27 des Luft-Ausbringungsabschnitts 26 beträgt. Wie bei den vorherigen Ausführungsbeispielen zuvor, weist auch bei dem fünften und sechsten Ausführungsbeispiel der Verteiler-Körper 17 der Wärmeluftströmungs-Verteiler-Vorrichtung 15 eine Gesamt-Längserstreckung 35 auf, welche mindestens dem 12-fachen des Innendurchmessers des Luft-Ausbringungsabschnitts 26 bzw. des Strömungsquerschnitts 27 entspricht. Dabei erstrecken sich die hintereinander liegend angeordnet und ausgebildeten Querschlitze 42 in Längsrichtung über eine Länge von höchstens 45% der Gesamt-Längserstreckung 35. Bei dem fünften Ausführungsbeispiel beträgt die Schlitzlänge 37 des Durchströmungsschlitzes 33 höchstens 45% der Gesamt-Längserstreckung 35. Bei dem fünften und sechsten Ausführungsbeispiel ist die zweite Luftauslassgeometrie 22 spiegelsymmetrisch zu der ersten Luftauslassgeometrie 21 ausgebildet und weist dementsprechend auch die vorstehend beschriebenen Merkmale auf.

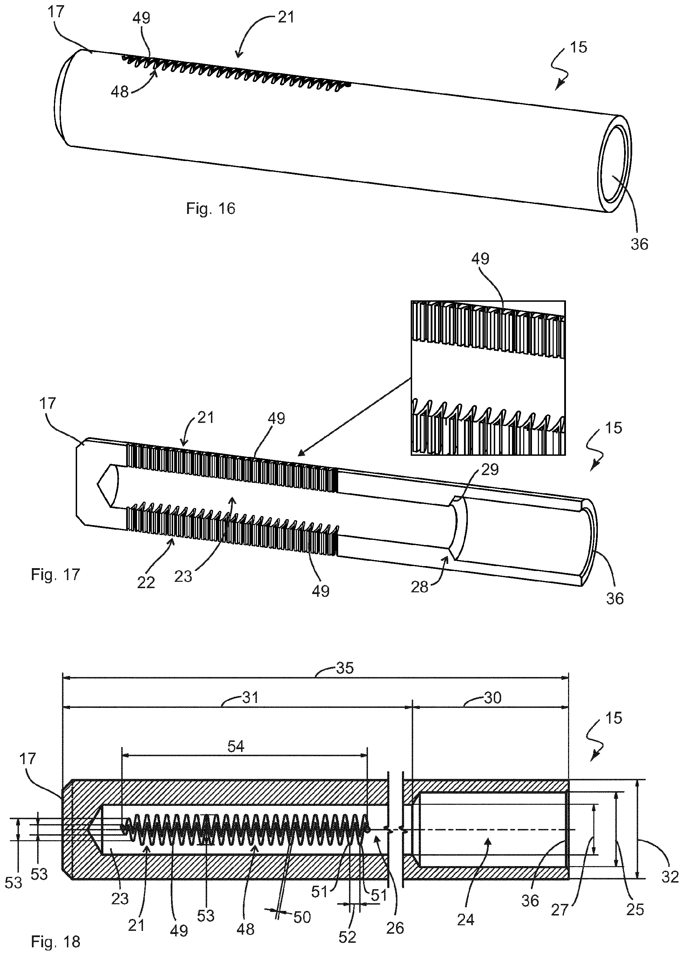

Die Figuren 16, 17 und 18 zeigen schließlich ein siebtes Ausführungsbeispiel, bei welchem die erste Luftauslassgeometrie 21 als ein sich in Längsrichtung 16 erstreckender und in einer Zickzacklinie 48 verlaufender Schlitz 49 ausgebildet ist. Der in einer Zickzacklinie 48 verlaufende Schlitzes 49 weist eine Breite 50 auf, welche mindestens 3% und höchstens 8% des Innendurchmessers bzw. des Strömungsquerschnitts 27 des Luft-Ausbringungsabschnitts 26 beträgt. Die zweite Luftauslassgeometrie 22 ist spiegelsymmetrisch ausgebildet und weist dementsprechend auch einen in einer Zickzacklinie 48 verlaufenden Schlitz 49 auf, wie der Schnittdarstellung der Figur 17 zu entnehmen ist. Bei diesem in einer Zickzacklinie 48 verlaufenden Schlitz 49, welcher die erste und zweite Luftauslassgeometrie 21 und 22 bei dem siebten Ausführungsbeispiel kennzeichnet, weisen zwei jeweilige Spitzen 51 einen Abstand 52 auf, welcher mindestens 15% und höchstens 25% des Strömungsquerschnitts 27 des Luft-Ausbringungsabschnitts 26 beträgt. Der Schlitz 49, welcher in einer Zickzacklinie 48 verlaufend ausgebildet ist, erstreckt sich mit einer quer zur Längsrichtung 16 gerichteten Quererstreckung 53, welche mindestens 15% und höchstens 50% des Strömungsquerschnitts 27 des Luft-Ausbringungsabschnitts 26 beträgt. Auch bei dem siebten Ausführungsbeispiel weist der Verteiler-Körper 17 der Wärmeluftströmungs-Verteiler-Vorrichtung 15 eine Gesamt-Längserstreckung 35 auf, welche dem 12-fachen des Innendurchmessers des Luft-Ausbringungsabschnitts 26 bzw. des Strömungsquerschnitts 27 entspricht. Die Längserstreckung 54 Schlitzes 49 beträgt höchstens 45% der Gesamt-Längserstreckung 35, wobei sich der Schlitz 49 bei ca. 50% der Gesamt-Längserstreckung 35 in eine von dem offenen und mit der Wärmeluftströmungs-Gebläse-Vorrichtung 14 strömungsverbundenen Längsende 36 des Verteiler-Körpers 17 wegweisende Richtung erstreckt.

Mit der Erfindung wird ein flexibles und kostengünstiges Herstellungsverfahren zur Anbringung von Profilelementen an Zahnriemen bereitgestellt. Für die erfindungsgemäße Herstellung eines solchen Zahnriemens mit Profilelementen entfallen bislang erforderliche Arbeitsgänge, wie zum Beispiel das Entgraten eines eventuell beim Fügen entstehenden Schweißgrates. Stattdessen wird mit der vorliegenden Erfindung ein vollautomatisierbar betreibbares und produktivitätssteigerndes Herstellungsverfahren bereitgestellt, welches zum Beispiel die erfindungsgemäße Zahnriemen-Profilelement-Verbindungsvorrichtung verwendet.

Die beschriebene Erfindung ist selbstverständlich nicht auf die beschriebenen und dargestellten Ausführungsform beschränkt. An den in der Zeichnung dargestellten Ausführungsform können zahlreiche, dem Fachmann entsprechend der beabsichtigten Anwendung naheliegende Abänderungen vorgenommen werden, ohne dass dadurch der Bereich der Erfindung verlassen wird. Der Fachmann wird erkennen, dass die erste Luftauslassgeometrie und die zweite Luftauslassgeometrie an einer einzigen Wärmeluftströmungs-Verteiler-Vorrichtung mit einer Wärmeluftströmungs-Gebläse-Vorrichtung ausgebildet sein können, wie es in den Figuren gezeigt ist. Alternativ umfasst die Erfindung auch eine Ausführung, bei welcher die erste Luftauslassgeometrie an einer Wärmeluftströmungs-Verteiler-Vorrichtung mit einer Wärmeluftströmungs-Gebläse-Vorrichtung und die zweite Luftauslassgeometrie an einer weiteren Wärmeluftströmungs-Verteiler-Vorrichtung mit einer weiteren Wärmeluftströmungs-Gebläse-Vorrichtung ausgebildet sind, wobei unabhängig davon immer die erste Luftauslassgeometrie 21 auf den Anbringungsabschnitt 19 des Zahnriemens 3 ausgerichtet angeordnet ist und die zweite Luftauslassgeometrie 22 auf den Profilelementabschnitt 20 des Profilelements 3 ausgerichtet angeordnet ist.

## Patentansprüche

1. Zahnriemen-Profilelement-Verbindungsvorrichtung (4), aufweisend wenigstens eine zur Erzeugung von einer Wärmeluftströmung ausgebildete Wärmeluftströmungs-Gebläse-Vorrichtung (14) und wenigstens eine mit der Wärmeluftströmungs-Gebläse-Vorrichtung (14) strömungsverbundene Wärmeluftströmungs-Verteiler-Vorrichtung (15),
wobei die wenigstens eine Wärmeluftströmungs-Verteiler-Vorrichtung (15) einen sich in eine Längsrichtung (16) erstreckenden Verteiler-Körper (17) aufweist, der innen hohl mit einer Verteiler-Kammer (23) ausgebildet ist,
wobei der Verteiler-Körper (17) eine erste Luftauslassgeometrie (21) aufweist, welche in die Längsrichtung (16) ausgerichtet ausgebildet ist und welche mit der Verteiler-Kammer (23) strömungsverbunden ist,
wobei die wenigstens eine Wärmeluftströmungs-Verteiler-Vorrichtung (15) oder eine weitere Wärmeluftströmungs-Verteiler-Vorrichtung, welche mit der Wärmeluftströmungs-Gebläse-Vorrichtung (14) oder mit einer weiteren Wärmeluftströmungs-Gebläse-Vorrichtung strömungsverbunden ist und welche einen weiteren sich in die Längsrichtung (16) erstreckenden und innen hohl mit einer weiteren Verteiler-Kammer ausgebildeten Verteiler-Körper aufweist, eine zweite Luftauslassgeometrie (22), welche in die Längsrichtung (16) ausgerichtet ausgebildet ist und welche mit der Verteiler-Kammer (23) oder mit der weiteren Verteiler-Kammer strömungsverbunden ist, aufweist, und
wobei die erste Luftauslassgeometrie (21) und die zweite Luftauslassgeometrie (22) sich gegenüberliegend angeordnet sind.

2. Zahnriemen-Profilelement-Verbindungsvorrichtung (4) nach Anspruch 1, wobei der Verteiler-Körper (17) in einen Luft-Zuführungsabschnitt (24) mit einem Durchströmungsquerschnitt (25) und einen Luft-Ausbringungsabschnitt (26) mit einem Strömungsquerschnitt (27) unterteilt ist, wobei die erste Luftauslassgeometrie (21) und die zweite Luftauslassgeometrie (22) in dem Luft-Ausbringungsabschnitt (26) ausgebildet und angeordnet sind und der Luft-Zuführungsabschnitt (24) mit der Wärmeluftströmungs-Gebläse-Vorrichtung (14) strömungsverbunden ist.

3. Zahnriemen-Profilelement-Verbindungsvorrichtung (4) nach Anspruch 2, wobei die erste Luftauslassgeometrie (21) als ein Durchströmungsschlitz (33) mit einer Schlitzbreite (34) ausgebildet ist, und wobei sich der Durchströmungsschlitz (33) in die Längsrichtung (16) erstreckt.

4. Zahnriemen-Profilelement-Verbindungsvorrichtung (4) nach Anspruch 3, wobei die Schlitzbreite (34) des Durchströmungsschlitzes (33) konstant ausgebildet ist und mindestens 3% und höchstens 10% des Strömungsquerschnitts (27) des Luft-Ausbringungsabschnitts (26) entspricht.

5. Zahnriemen-Profilelement-Verbindungsvorrichtung (4) nach Anspruch 4, wobei die Schlitzbreite (34) des Durchströmungsschlitzes (33) in eine von dem Luft-Zuführungsabschnitt (24) wegweisende Richtung abnehmend ausgebildet ist, wobei die Schlitzbreite (34) von höchstens 35% des Strömungsquerschnitts (27) des Luft-Ausbringungsabschnitts (26) bis hin zu wenigstens 5% und höchstens 10% des Strömungsquerschnitts (27) des Luft-Ausbringungsabschnitts (26) abnehmend ausgebildet ist.

6. Zahnriemen-Profilelement-Verbindungsvorrichtung (4) nach Anspruch 2, wobei die erste Luftauslassgeometrie (21) mehrere Durchströmungsbohrungen (38) aufweist, welche beabstandet zueinander und in Längsrichtung (16) hintereinanderliegend angeordnet sind.

7. Zahnriemen-Profilelement-Verbindungsvorrichtung (4) nach Anspruch 6, wobei die Durchströmungsbohrungen (38) mit einem gleichen Durchmesser (39) ausgebildet sind, welcher höchstens 35% des Strömungsquerschnitts (27) des Luft-Ausbringungsabschnitts (26) beträgt.

8. Zahnriemen-Profilelement-Verbindungsvorrichtung (4) nach Anspruch 7, wobei die Durchströmungsbohrungen (38) einen konstanten Zwischenraum (40) zwischen sich aufweisen, welcher mindestens 40% und höchstens 50% des Strömungsquerschnitts (27) des Luft-Ausbringungsabschnitts (26) beträgt.

9. Zahnriemen-Profilelement-Verbindungsvorrichtung (4) nach Anspruch 2, wobei die erste Luftauslassgeometrie (21) mehrere Querschlitze (42) aufweist, wobei sich ein jeweiliger Querschlitz (42) mit einer Quererstreckung (43) quer zur Längsrichtung (16) erstreckt, und wobei die Querschlitze (42) in Längsrichtung (16) hintereinanderliegend und beabstandet zueinander angeordnet ausgebildet sind.

10. Zahnriemen-Profilelement-Verbindungsvorrichtung (4) nach Anspruch 2, wobei die erste Luftauslassgeometrie (21) zusätzlich mehrere Querschlitze (42) aufweist, wobei sich ein jeweiliger Querschlitz (42) mit einer Quererstreckung (43) quer zur Längsrichtung (16) erstreckt, und wobei die Querschlitze (42) in Längsrichtung (16) hintereinanderliegend und beabstandet zueinander angeordnet ausgebildet sind und der Durchströmungsschlitz (33) zentral durch die Querschlitze (42) verlaufend ausgebildet ist.

11. Zahnriemen-Profilelement-Verbindungsvorrichtung (4) nach Anspruch 9 oder 10, wobei eine in Längsrichtung (16) betrachtete Breite (45) eines jeweiligen Querschlitzes (42) höchstens 10% des Strömungsquerschnitts (27) des Luft-Ausbringungsabschnitts (26) beträgt.

12. Zahnriemen-Profilelement-Verbindungsvorrichtung (4) nach Anspruch 2, wobei die erste Luftauslassgeometrie (21) als ein sich in Längsrichtung (16) erstreckender und in einer Zickzacklinie (48) verlaufender Schlitz (49) ausgebildet ist.

13. Zahnriemen-Profilelement-Verbindungsvorrichtung (4) nach Anspruch 12, wobei der Schlitz (49) eine Breite (50) aufweist, welche mindestens 3% und höchstens 8% des Strömungsquerschnitts (27) des Luft-Ausbringungsabschnitts (26) beträgt.

14. Zahnriemen-Profilelement-Verbindungsvorrichtung (4) nach einem der vorhergehenden Ansprüche, wobei der Verteiler-Körper (17) der wenigstens einen Wärmeluftströmungs-Verteiler-Vorrichtung (15) und/oder der weiteren Wärmeluftströmungs-Verteiler-Vorrichtung hohlzylindrisch ausgebildet sind/ist.

15. Zahnriemen-Profilelement-Verbindungsvorrichtung (4) nach einem der vorhergehenden Ansprüche, wobei die erste Luftauslassgeometrie (21) und die zweite Luftauslassgeometrie (22) in Bezug auf die Längsrichtung (16) symmetrisch zueinander ausgebildet sind.

16. System (1) zur stoffschlüssigen Anbringung eines Profilelements (2) auf einem Zahnriemen (3), wobei das System (1) wenigstens eine Zahnriemen-Profilelement-Verbindungsvorrichtung (4) nach einem der Ansprüche 1 bis 15 und eine zum Anordnen eines anzubringenden Profilelements (2) ausgebildete Robotervorrichtung (5) mit wenigstens einem beweglich ausgebildeten Robotergreifarm (6) aufweist.

17. Herstellungsverfahren zur stoffschlüssigen Anbringung eines Profilelements (2) auf einem Zahnriemen (3), welcher eine Zahnseite (8) mit einer Bezahnung (9) und einen rückseitig der Zahnseite (8) befindlichen Zahnriemenrücken (10) aufweist,
wobei das anzubringende Profilelement (2) in einem vorgegebenen Abstand (11) zu dem Zahnriemenrücken (10) des Zahnriemens (3) angeordnet wird,
wobei nach dem Anordnen ein für das anzubringende Profilelement (2) vorgesehener Anbringungsabschnitt (19) auf dem Zahnriemenrücken (10) und ein auf dem Anbringungsabschnitt (19) anzubringender Profilelementabschnitt (20) des anzubringenden Profilelements (2) mittels Wärmeluftströmung auf eine vorgegebene Schmelztemperatur für eine vorgegebene Zeitdauer erwärmt werden, und
wobei nach dem Erwärmen auf die vorgegebene Schmelztemperatur für die vorgegebene Zeitdauer der Profilelementabschnitt (20) auf den Anbringungsabschnitt (19) aufgesetzt wird.

18. Herstellungsverfahren nach Anspruch 17, wobei die Wärmeluftströmung von einer Zahnriemen-Profilelement-Verbindungsvorrichtung (4) nach einem der Ansprüche 1 bis 15 erzeugt wird.

19. Herstellungsverfahren nach Anspruch 18, wobei die Zahnriemen-Profilelement-Verbindungsvorrichtung (4) zum Erwärmen zwischen dem Anbringungsabschnitt (19) und dem Profilelementabschnitt (20) derart angeordnet wird, dass die erste Luftauslassgeometrie (21) auf den Anbringungsabschnitt (19) ausgerichtet angeordnet wird und die zweite Luftauslassgeometrie (22) auf den Profilelementabschnitt (20) ausgerichtet angeordnet wird.

20. Herstellungsverfahren nach Anspruch 18 oder 19, wobei zur Erreichung der vorgegebenen Schmelztemperatur von der wenigstens einen Wärmeluftströmungs-Gebläse-Vorrichtung (14) und/oder der weiteren Wärmeluftströmungs-Gebläse-Vorrichtung eine Wärmeluftströmung mit mindestens 300°C und höchstens 500°C zu der wenigstens einen Wärmeluftströmungs-Verteiler-Vorrichtung (15) und/oder zu der weiteren Wärmeluftströmungs-Verteiler-Vorrichtung gefördert wird.

## Claims

1. Gear belt profile element connecting device (4), comprising at least one heat air flow blower device (14) designed to generate a heat air flow and at least one heat air flow distributor device (15) flow-connected to the heat air flow blower device (14),
wherein the at least one heat air flow distributor device (15) has a distributor body (17) extending in a longitudinal direction (16), which is hollow on the inside with a distributor chamber (23),
wherein the distributor body (17) has a first air outlet geometry (21) which is aligned in the longitudinal direction (16) and which is flow-connected to the distributor chamber (23),
wherein the at least one heat air flow distributor device (15) or a further heat air flow distributor device, which is flow-connected to the heat air flow blower device (14) or to a further heat air flow blower device and which has a further distributor body extending in the longitudinal direction (16) and formed hollow inside with a further distributor chamber, **characterized in that** the at least one heat air flow distributor device (15) or a further heat air flow distributor device, which is flow-connected to the heat air flow blower device (14) or to a further heat air flow blower device and which has a further distributor body extending in the longitudinal direction (16) and formed hollow inside with a further distributor chamber, a second air outlet geometry (22), which is aligned in the longitudinal direction (16) and which is flow-connected to the distributor chamber (23) or to the further distributor chamber, and
wherein the first air outlet geometry (21) and the second air outlet geometry (22) are arranged opposite one another.

2. Gear belt profile element connecting device (4) according to claim 1, wherein the distributor body (17) is divided into an air supply section (24) with a through-flow cross-section (25) and an air discharge section (26) with a flow cross-section (27), wherein the first air outlet geometry (21) and the second air outlet geometry (22) are formed and arranged in the air discharge section (26) and the air supply section (24) is flow-connected to the thermal air flow blower device (14).

3. Gear belt profile element connecting device (4) according to claim 2, wherein the first air outlet geometry (21) is formed as a flow-through slot (33) with a slot width (34), and wherein the flow-through slot (33) extends in the longitudinal direction (16).

4. Gear belt profile element connecting device (4) according to claim 3, wherein the slot width (34) of the through-flow slot (33) is designed to be constant and corresponds to at least 3% and at most 10% of the flow cross-section (27) of the air discharge section (26).

5. Gear belt profile element connecting device (4) according to claim 4, wherein the slot width (34) of the flow-through slot (33) is designed to decrease in a direction pointing away from the air supply section (24), wherein the slot width (34) is designed to decrease from at most 35% of the flow cross-section (27) of the air discharge section (26) to at least 5% and at most 10% of the flow cross-section (27) of the air discharge section (26).

6. Gear belt profile element connecting device (4) according to claim 2, wherein the first air outlet geometry (21) has a plurality of flow-through holes (38) which are arranged at a distance from one another and one behind the other in the longitudinal direction (16).

7. Gear belt profile element connecting device (4) according to claim 6, wherein the flow-through bores (38) are formed with an equal diameter (39), which is at most 35% of the flow cross-section (27) of the air discharge section (26).

8. Gear belt profile element connecting device (4) according to claim 7, wherein the flow-through holes (38) have a constant space (40) between them, which is at least 40% and at most 50% of the flow cross-section (27) of the air discharge section (26).

9. Gear belt profile element connecting device (4) according to claim 2, wherein the first air outlet geometry (21) has a plurality of transverse slots (42), wherein a respective transverse slot (42) extends with a transverse extension (43) transversely to the longitudinal direction (16), and wherein the transverse slots (42) are arranged one behind the other in the longitudinal direction (16) and spaced apart from one another.

10. Gear belt profile element connecting device (4) according to claim 2, wherein the first air outlet geometry (21) additionally has a plurality of transverse slots (42), wherein a respective transverse slot (42) extends with a transverse extension (43) transversely to the longitudinal direction (16), and wherein the transverse slots (42) are arranged one behind the other and spaced apart from one another in the longitudinal direction (16) and the flow-through slot (33) is designed to extend centrally through the transverse slots (42).

11. Gear belt profile element connecting device (4) according to claim 9 or 10, wherein a width (45) of a respective transverse slot (42) viewed in the longitudinal direction (16) is at most 10% of the flow cross-section (27) of the air discharge section (26).

12. Gear belt profile element connecting device (4) according to claim 2, wherein the first air outlet geometry (21) is designed as a slot (49) extending in the longitudinal direction (16) and running in a zigzag line (48).

13. Gear belt profile element connecting device (4) according to claim 12, wherein the slot (49) has a width (50) which is at least 3% and at most 8% of the flow cross-section (27) of the air discharge section (26).

14. Gear belt profile element connecting device (4) according to one of the preceding claims, wherein the distributor body (17) of the at least one heat air flow distributor device (15) and/or the further heat air flow distributor device are/is hollow cylindrical in shape.

15. Gear belt profile element connecting device (4) according to one of the preceding claims, wherein the first air outlet geometry (21) and the second air outlet geometry (22) are formed symmetrically to each other with respect to the longitudinal direction (16).

16. System (1) for materially attaching a profile element (2) to a toothed belt (3), the system (1) having at least one toothed belt-profile element connecting device (4) according to one of claims 1 to 15 and a robot device (5) designed for arranging a profile element (2) to be attached and having at least one movably designed robot gripper arm (6).

17. Production method for attaching a profile element (2) to a toothed belt (3) in a material-locking manner, which has a toothed side (8) with a toothing (9) and a toothed belt back (10) located on the rear side of the toothed side (8),
wherein the profile element (2) to be attached is arranged at a predetermined distance (11) from the toothed belt back (10) of the toothed belt (3),
wherein, after the arrangement, an attachment portion (19) provided for the profiled element (2) to be attached on the toothed belt back (10) and a profiled element portion (20) of the profiled element (2) to be attached on the attachment portion (19) are heated to a predetermined melting temperature for a predetermined period of time by means of a flow of hot air, and
wherein, after heating to the predetermined melting temperature for the predetermined period of time, the profiled element portion (20) is placed on the attachment portion (19).

18. Production method according to claim 17, wherein the thermal air flow is generated by a timing belt-profile element connecting device (4) according to any one of claims 1 to 15.

19. Production method according to claim 18, wherein the toothed belt profiled element connecting device (4) for heating is arranged between the attachment portion (19) and the profiled element portion (20) such that the first air outlet geometry (21) is arranged aligned with the attachment portion (19) and the second air outlet geometry (22) is arranged aligned with the profiled element portion (20).

20. Production method according to claim 18 or 19, wherein, to achieve the predetermined melting temperature, a flow of thermal air at at least 300°C and at most 500°C is conveyed from the at least one thermal air flow blower device (14) and/or the further thermal air flow blower device to the at least one heat air flow distributor device (15) and/or to the further thermal air flow distributor device.

## Revendications

1. Dispositif d'assemblage d'éléments profilés de courroie crantée (4), comprenant au moins un dispositif de soufflage d'écoulement d'air chaud (14) conçu pour générer un écoulement d'air chaud et au moins un dispositif de distribution d'écoulement d'air chaud (15) en communication d'écoulement avec le dispositif de soufflage d'écoulement d'air chaud (14),
dans lequel ledit au moins un dispositif de distribution d'écoulement d'air chaud (15) comprend un corps de distribution (17) s'étendant dans une direction longitudinale (16), ledit corps de distribution étant creux à l'intérieur avec une chambre de distribution (23),
dans lequel le corps de distribution (17) présente une première géométrie de sortie d'air (21) qui est réalisée en étant orientée dans la direction longitudinale (16) et qui est en liaison d'écoulement avec la chambre de distribution (23),
dans lequel le au moins un dispositif de distribution d'écoulement d'air chaud (15) ou un autre dispositif de distribution d'écoulement d'air chaud, qui est en liaison d'écoulement avec le dispositif de soufflage d'écoulement d'air chaud (14) ou avec un autre dispositif de soufflage d'écoulement d'air chaud et qui présente un autre corps de distribution s'étendant dans la direction longitudinale (16) et formé de manière creuse à l'intérieur avec une autre chambre de distribution, une deuxième géométrie de sortie d'air (22), qui est réalisée en étant orientée dans la direction longitudinale (16) et qui est en liaison d'écoulement avec la chambre de distribution (23) ou avec l'autre chambre de distribution, et
dans lequel la première géométrie de sortie d'air (21) et la deuxième géométrie de sortie d'air (22) sont disposées en face l'une de l'autre.

2. Dispositif d'assemblage d'éléments profilés de courroie crantée (4) selon la revendication 1, dans lequel le corps de distribution (17) est divisé en une section d'alimentation en air (24) ayant une section de passage (25) et une section de distribution d'air (26) ayant une section d'écoulement (27), dans lequel la première géométrie de sortie d'air (21) et la deuxième géométrie de sortie d'air (22) sont formées et disposées dans la section de distribution d'air (26), et la section d'alimentation en air (24) est en communication d'écoulement avec le dispositif de soufflage d'écoulement d'air chaud (14).

3. Dispositif d'assemblage d'éléments profilés de courroie crantée (4) selon la revendication 2, dans lequel la première géométrie de sortie d'air (21) est réalisée sous la forme d'une fente d'écoulement (33) avec une largeur de fente (34), et dans lequel la fente d'écoulement (33) s'étend dans la direction longitudinale (16).

4. Dispositif d'assemblage d'éléments profilés de courroie crantée (4) selon la revendication 3, dans lequel la largeur de fente (34) de la fente d'écoulement (33) est réalisée de manière constante et correspond à au moins 3% et au plus 10% de la section transversale d'écoulement (27) de la section de distribution d'air (26).

5. Dispositif d'assemblage d'éléments profilés de courroie crantée (4) selon la revendication 4, dans lequel la largeur de fente (34) de la fente d'écoulement (33) est formée de manière à diminuer dans une direction s'éloignant de la section d'alimentation en air (24), la largeur de fente (34) étant formée de manière à diminuer à partir d'au plus 35% de la section transversale d'écoulement (27) de la section de décharge d'air (26) jusqu'à au moins 5% et au plus 10% de la section transversale d'écoulement (27) de la section de décharge d'air (26).

6. Dispositif d'assemblage d'éléments profilés de courroie crantée (4) selon la revendication 2, dans lequel la première géométrie de sortie d'air (21) présente plusieurs alésages de passage (38) qui sont disposés à distance les uns des autres et les uns derrière les autres dans la direction longitudinale (16) .

7. Dispositif d'assemblage d'éléments profilés de courroie crantée (4) selon la revendication 6, dans lequel les trous d'écoulement (38) sont formés avec un même diamètre (39) qui représente au plus 35% de la section d'écoulement (27) de la section de distribution d'air (26).

8. Dispositif d'assemblage d'éléments profilés de courroie crantée (4) selon la revendication 7, dans lequel les trous d'écoulement (38) présentent un espacement constant (40) entre eux, qui représente au moins 40% et au plus 50% de la section transversale d'écoulement (27) de la section de distribution d'air (26).

9. Dispositif d'assemblage d'éléments profilés de courroie crantée (4) selon la revendication 2, dans lequel la première géométrie de sortie d'air (21) présente plusieurs fentes transversales (42), une fente transversale (42) respective s'étendant avec une extension transversale (43) transversalement à la direction longitudinale (16), et dans lequel les fentes transversales (42) sont réalisées en étant disposées les unes derrière les autres dans la direction longitudinale (16) et à distance les unes des autres.

10. Dispositif d'assemblage d'éléments profilés de courroie crantée (4) selon la revendication 2, dans lequel la première géométrie de sortie d'air (21) présente en outre plusieurs fentes transversales (42), une fente transversale respective (42) s'étendant avec une extension transversale (43) transversalement à la direction longitudinale (16), et dans lequel les fentes transversales (42) sont réalisées en étant disposées les unes derrière les autres et à distance les unes des autres dans la direction longitudinale (16), et la fente de passage d'écoulement (33) est réalisée en s'étendant de manière centrale à travers les fentes transversales (42).

11. Dispositif d'assemblage d'éléments profilés de courroie crantée (4) selon la revendication 9 ou 10, dans lequel une largeur (45), considérée dans la direction longitudinale (16), d'une fente transversale respective (42) représente au maximum 10% de la section transversale d'écoulement (27) de la section de distribution d'air (26).

12. Dispositif d'assemblage d'éléments profilés de courroie crantée (4) selon la revendication 2, dans lequel la première géométrie de sortie d'air (21) est réalisée sous la forme d'une fente (49) s'étendant dans la direction longitudinale (16) et s'étendant selon une ligne en zigzag (48).

13. Dispositif d'assemblage d'éléments profilés de courroie crantée (4) selon la revendication 12, dans lequel la fente (49) a une largeur (50) qui est au moins égale à 3% et au plus égale à 8% de la section transversale d'écoulement (27) de la section de distribution d'air (26).

14. Dispositif d'assemblage d'éléments profilés de courroie crantée (4) selon l'une quelconque des revendications précédentes, dans lequel le corps de distribution (17) dudit au moins un dispositif de distribution d'écoulement d'air chaud (15) et/ou dudit autre dispositif de distribution d'écoulement d'air chaud est/sont de forme cylindrique creuse.

15. Dispositif d'assemblage d'éléments profilés de courroie crantée (4) selon l'une quelconque des revendications précédentes, dans lequel la première géométrie de sortie d'air (21) et la deuxième géométrie de sortie d'air (22) sont symétriques l'une de l'autre par rapport à la direction longitudinale (16).

16. Système (1) pour la mise en place d'un élément profilé (2) sur une courroie crantée (3) par liaison de matière, le système (1) présentant au moins un Dispositif d'assemblage d'éléments profilés de courroie crantée (4) selon l'une des revendications 1 à 15 et un dispositif robotisé (5) conçu pour disposer un élément profilé (2) à mettre en place, avec au moins un bras de préhension de robot (6) conçu de manière mobile.

17. Procédé de fabrication pour le montage par liaison de matière d'un élément profilé (2) sur une courroie dentée (3), qui présente un côté denté (8) avec une denture (9) et un dos de courroie dentée (10) se trouvant sur le côté arrière du côté denté (8),
dans lequel l'élément profilé (2) à monter est disposé à une distance prédéterminée (11) du dos (10) de la courroie dentée (3),
dans lequel, après la mise en place, une section de mise en place (19) prévue pour l'élément profilé (2) à mettre en place sur le dos de courroie dentée (10) et une section d'élément profilé (20) de l'élément profilé (2) à mettre en place, à mettre en place sur la section de mise en place (19), sont chauffées au moyen d'un flux d'air thermique à une température de fusion prédéterminée pendant une durée prédéterminée, et
dans lequel, après le chauffage à la température de fusion prédéterminée pendant la durée prédéterminée, la section d'élément profilé (20) est placée sur la section de fixation (19) .

18. Procédé de fabrication selon la revendication 17, dans lequel le flux d'air chaud est généré par un Dispositif d'assemblage d'éléments profilés de courroie crantée (4) selon l'une quelconque des revendications 1 à 15.

19. Procédé de fabrication selon la revendication 18, dans lequel le dispositif de liaison courroie dentée-élément profilé (4) est disposé pour le chauffage entre la partie de montage (19) et la partie d'élément profilé (20) de telle sorte que la première géométrie de sortie d'air (21) est disposée en alignement avec la partie de montage (19) et la deuxième géométrie de sortie d'air (22) est disposée en alignement avec la partie d'élément profilé (20).

20. Procédé de fabrication selon la revendication 18 ou 19, dans lequel, pour atteindre la température de fusion prédéterminée, un flux d'air chaud d'au moins 300°C et d'au plus 500°C est transporté depuis le au moins un dispositif de soufflage d'écoulement d'air chaud (14) et/ou l'autre dispositif de soufflage d'écoulement d'air chaud vers le au moins un dispositif de distribution d'écoulement d'air chaud (15) et/ou vers l'autre dispositif de distribution d'écoulement d'air chaud.
